# EUROPÄISCHE PATENTANMELDUNG

(11) **EP 4 684 699 A1**
(43) Veröffentlichungstag der Anmeldung: **28.01.2026**
(21) Anmeldenummer: 24191138.7
(22) Anmeldetag: 26.07.2024
(51) Int. Cl.: A47J 27/00, A47J 36/32

(54) **KÜCHENMASCHINE ZUM ZUBEREITEN EINER SPEISE NEBST VERFAHREN**

(71) Anmelder: Vorwerk & Co. Interholding GmbH, 42275 Wuppertal (DE)
(72) Erfinder: ECHELMEYER, Benedikt, 44803 Bochum (DE); STADLER, Larissa, 42103 Wuppertal (DE)
(74) Vertreter: Gille Hrabal Partnerschaftsgesellschaft mbB Patentanwälte

(57) **Zusammenfassung**

Die Erfindung betrifft Küchenmaschine (1) zum Durchführen eines Speisenzubereitungsvorgangs durch Erhitzen, Dampfgaren, Zerkleinern und/oder Mischen einer Speise (20) in einem Speisenzubereitungsgefäß (2), wobei die Küchenmaschine (1) eine Steuerungseinrichtung (10) umfasst, die so eingerichtet ist, dass die Steuerungseinrichtung (10) auf Basis von einem oder mehreren Kochparametern (16) dafür sorgt, dass eine Speise (20) in dem Speisenzubereitungsgefäß (2) durch ein Heizelement (6) erhitzt und/oder durch ein drehbares Werkzeug (9) zum Mischen oder Zerkleinern bearbeitet wird, wobei die Steuerungseinrichtung (10) auf ein digitales Rezept (14) mit mehreren Rezeptschritten (15) zugreifen kann, das für mindestens einen Rezeptschritt (15) der mehreren Rezeptschritte (15) einen Wert (17) für den Kochparameter (16) oder Werte (17) für die Kochparameter (16) enthält, wobei ein Kochmodus (30) vorgesehen ist und die Küchenmaschine (1) so eingerichtet ist, dass in dem Kochmodus (30) der eine oder die mehreren Kochparameter (16) gemäß dem digitalen Rezept (14) festgelegt werden, um eine Speise (20) gemäß dem digitalen Rezept (14) wenigstens teilautomatisiert zuzubereiten, wobei ein Pausenmodus (31) vorgesehen ist und die Küchenmaschine (1) so eingerichtet ist, dass in dem Pausenmodus (31) eine dem Heizelement (6) zugeführte Energie, eine Drehzahl und/oder ein Drehmoment des Werkzeugs (9) in Abhängigkeit von einem Überwachungsergebnis reduziert werden können, so dass es im Falle einer solchen Reduzierung zu einer Abweichung bei mindestens einem Kochparameter (16) verglichen mit dem vom digitalen Rezept (14) festgelegten Wert (17) kommt, wobei eine Aktivierung des Pausenmodus (31) während des Kochmodus (30) dazu führt, dass vom Kochmodus (30) in den Pausenmodus (31) gewechselt wird, wobei eine anschließende Reaktivierung des Kochmodus (30) während des Pausenmodus (31) dazu führt, dass vom Pausenmodus (31) zurück in den Kochmodus (30) gewechselt wird. Die Steuerungseinrichtung (10) ist so konfiguriert, dass mindestens eine Messgröße erfasst wird, um eine Änderung des Speisenzubereitungsvorgangs und/oder der Speise (20) infolge eines Wechsels von dem Kochmodus (30) in den Pausenmodus (31) und zurück in den Kochmodus (30) zu ermitteln. Die Erfindung betrifft ebenfalls ein entsprechendes Verfahren und Computerprogrammprodukt. Dem Benutzer wird hierdurch eine größere Flexibilität einschließlich der Möglichkeit des Energiesparens bei der Speisenzubereitung mit der Küchenmaschine ermöglicht.

## Beschreibung

Die Erfindung betrifft eine Küchenmaschine zum Durchführen eines Speisenzubereitungsvorgangs durch Erhitzen, Dampfgaren, Zerkleinern und/oder Mischen einer Speise in einem Speisenzubereitungsgefäß. Die Küchenmaschine umfasst eine Steuerungseinrichtung, die so eingerichtet ist, dass die Steuerungseinrichtung auf Basis von einem oder mehreren Kochparametern dafür sorgt, dass eine Speise in dem Speisenzubereitungsgefäß durch ein Heizelement erhitzt und/oder durch ein drehbares Werkzeug zum Mischen oder Zerkleinern bearbeitet wird.

Küchenmaschinen erfreuen sich zunehmender Beliebtheit, die mithilfe einer Benutzerschnittstelle gemeinsam mit einem Benutzer auf teilautomatisierte Weise ein digitales Rezept mit Rezeptschritten abarbeiten. Der Benutzer wird beispielsweise angewiesen, eine Zutat in das Speisenzubereitungsgefäß zu geben und anschließend bearbeitet die Küchenmaschine diese Zutat durch Erhitzen, Zerkleinern und/oder Mischen, bis eine nächste, manuelle Aktion des Benutzers erforderlich ist und über die Benutzerschnittstelle dem Benutzer angezeigt wird.

Es besteht ein zunehmender Bedarf nach einer größeren Flexibilität seitens der Benutzer.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, eine weiterentwickelte Küchenmaschine nebst weiterentwickeltem Verfahren und Computerprogrammprodukt bereitzustellen.

Zur Lösung der Aufgabe dient eine Küchenmaschine zum Durchführen eines Speisenzubereitungsvorgangs durch Erhitzen, Dampfgaren, Zerkleinern und/oder Mischen einer Speise in einem Speisenzubereitungsgefäß. Die Küchenmaschine umfasst eine Steuerungseinrichtung, die so eingerichtet ist, dass die Steuerungseinrichtung auf Basis von einem oder mehreren Kochparametern dafür sorgt, dass eine Speise in dem Speisenzubereitungsgefäß durch ein Heizelement erhitzt und/oder durch ein drehbares Werkzeug zum Mischen oder Zerkleinern bearbeitet wird. Ein Kochparameter ist bevorzugt mindestens einer der Folgenden: eine Soll-Speisentemperatur und/oder eine hierfür dem Heizelement zuzuführende Energie; eine Drehzahl des Werkzeugs und/oder eine hierfür vorgesehene Soll-Drehzahl eines Antriebs für das Werkzeug; eine Zeitdauer für ein Erhitzen, Dampfgaren, Zerkleinern oder Mischen.

Erfindungsgemäß ist die Steuerungseinrichtung so konfiguriert, dass mindestens eine Messgröße erfasst wird, um eine Änderung des Speisenzubereitungsvorgangs und/oder der Speise infolge eines Wechsels von dem Kochmodus in den Pausenmodus und zurück in den Kochmodus zu ermitteln.

Eine größere Flexibilität seitens der Benutzer wird so bei der Zubereitung einer Speise mit einer Küchenmaschine ermöglicht. Der Benutzer erhält hierdurch die Flexibilität, bei der Speisenzubereitung mit der Küchenmaschine eine Pause einzulegen, um auf Toilette zu gehen oder wenn es an der Haustür klingelt.

Maßgeblich ist dabei der Gedanke, die Steuerungseinrichtung in die Lage zu versetzen, zu erkennen, ob die vom Benutzer eingelegte Pause bzw. der Wechsel in den Pausenmodus überhaupt eine Auswirkung auf das Kochergebnis hat oder nicht. Energie und Prozessorkapazität können so gespart werden, indem nur dann in den Speisenzubereitungsvorgang eingegriffen wird, wenn durch den Pausenmodus eine Verschlechterung des Kochergebnisses zu erwarten ist.

Weil der Benutzer meist eine Pause einlegt bzw. den Pausenmodus aktiviert, um sich von der Küchenmaschine örtlich zu entfernen, können in vielen Fällen erforderliche Sofort-Maßnahmen, die noch während der Pausendauer im Hinblick auf das Kochergebnis erforderlich wären, von dem Benutzer selber gar nicht veranlasst oder durchgeführt werden.

Als Bonuseffekt werden zugleich die Voraussetzungen dafür geschaffen, dass der Benutzer unter bestimmten Umständen die Flexibilität erlangt, durch gezieltes Aktivieren des Pausenmodus den Energieverbrauch für die Speisenzubereitung zu senken und dadurch sowohl die Umwelt zu schonen als auch Kosten sparen können.

Eine Änderung der Speise betrifft insbesondere eine Änderung einer Eigenschaft der Speise, vorzugsweise einer Speisentemperatur oder einer Viskosität der Speise. Bevorzugt ist die Messgröße oder eine der mindestens einen Messgröße die Speisentemperatur, die bevorzugt durch einen Temperatursensor gemessen wird. Bevorzugt befindet sich der Temperatursensor an dem Speisenzubereitungsgefäß, insbesondere bodenseitig. Insbesondere wird die von dem Temperatursensor gemessene Temperatur als die Speisentemperatur angenommen oder auf Basis des Signals des Temperatursensors die Speisentemperatur (indirekt) ermittelt. Insbesondere wird die Speisentemperatur kontinuierlich gemessen und/oder an wenigstens zwei Zeitpunkte relativ zu den Wechseln von dem Kochmodus in den Pausenmodus und zurück in den Kochmodus von der Steuerungseinrichtung zum Zwecke der Ermittlung der Änderung verarbeitet. Bevorzugt ist die Messgröße oder eine der mindestens einen Messgröße zum Ermitteln einer Änderung einer Viskosität (oder Konsistenz einer Speise) eine Motorlast und/oder eine Schwankungsamplitude von Gewichtssensorsignalen.

Eine Änderung des Speisenzubereitungsvorgangs betrifft insbesondere eine zeitliche Änderung der Speisenzubereitung. Bevorzugt ist die Messgröße oder eine der mindestens einen Messgröße eine Pausendauer, also der Zeitraum zwischen dem Wechsel vom Kochmodus in den Pausenmodus und zurück in den Kochmodus.

Alternativ oder ergänzend betrifft eine Änderung des Speisenzubereitungsvorgangs insbesondere eine Änderung eines oder mehrerer Kochparameters wie z.B. die Drehzahl des Werkzeugs, das Drehmoment des Werkzeugs, die Speisentemperatur und/oder Zustände der Küchenmaschine wie z.B. der Deckel-Auflagezustand.

Die Steuerungseinrichtung kann auf ein digitales Rezept mit mehreren Rezeptschritten zugreifen, das für mindestens einen Rezeptschritt der mehreren Rezeptschritte einen Wert für den Kochparameter oder Werte für die Kochparameter enthält. Ein digitales Rezept ist insbesondere ein elektronisch gespeichertes Rezept. Ein Wert für einen Kochparameter kann analog oder digital sein. Beispielsweise kann ein Wert für den Kochparameter Soll-Speisentemperatur eine Zahl sein, die der Temperatur in °C entspricht, z.B. 100°C. Beispielsweise kann ein Wert 200 U/min für den Kochparameter Drehzahl des Werkzeugs sein. Insbesondere kann die Steuerungseinrichtung - teilweise oder vollständig - in einer in der Küchenmaschine integrierten Komponente enthalten sein, in einer Cloud bzw. auf einen Cloud-Server ausgelagert sein und/oder in einer App auf einem mobilen Benutzergerät wie ein Smartphone realisiert sein. In einer Ausgestaltung ist die Steuerungseinrichtung zumindest teilweise auf einem externen Server realisiert, wie beispielsweise Verarbeitung von Werten und/oder Wertermittlungen. Die Steuerungseinrichtung sendet dann zu verarbeitende Daten an den externen Server und erhält verarbeitete Werte zurück. Rechenkapazität kann so für die Küchenmaschine gespart und die Verarbeitungsprozesse auf dem externen Server zentral verwaltet werden. Insbesondere ist die Benutzerschnittstelle - teilweise oder vollständig - ein Bestandteil der Küchenmaschine und/oder eines mobilen Benutzergerät wie ein Smartphone. Das digitale Rezept kann in einem Speicher der Steuerungseinrichtung und/oder in einer Cloud oder eine App eines mobilen Benutzergerät wie ein Smartphone gespeichert sein, wobei die Steuerungseinrichtung darauf Zugriff hat.

Erfindungsgemäß ist ein Kochmodus vorgesehen und die Küchenmaschine ist so eingerichtet, dass in dem Kochmodus der eine Kochparameter oder die mehreren Kochparameter gemäß dem digitalen Rezept festgelegt werden, um eine Speise gemäß dem digitalen Rezept zuzubereiten, bevorzugt wenigstens teilautomatisiert. Kochparameter gemäß dem digitalen Rezept festlegen bedeutet, dass ein digitales Rezept einen Wert für einen Kochparameter enthält oder dass ein digitales Rezept einen Rezeptschritt mit einem Wert für einen Kochparameter enthält, wobei dem Kochparameter dieser Wert zugeordnet wird. Z.B. wird durch einen Rezeptschritt mit den Werten Soll-Speisentemperatur 98°C für Zeitdauer 5 Minuten eines digitalen Rezeptes für den Kochparameter Soll-Speisentemperatur der Wert 98°C festgelegt und für den Kochparameter Zeitdauer der Wert 5 Minuten. Wenn in diesem Beispiel dieser Rezeptschritt erfolgt, wird im Kochmodus das Heizelement für 5 Minuten mit einer zugeführten Energie zum Erzielen einer Soll-Speisentemperatur von 98°C angesteuert. Ein Speisenzubereitungsvorgang, der mit der Küchenmaschine von Anfang bis Fertigstellung der Speise ununterbrochen im Kochmodus durchgeführt wird, wird im Folgenden auch als "planmäßiger" Speisenzubereitungsvorgang bezeichnet.

Wenigstens teilautomatisiert bedeutet, dass eine Speisenzubereitung mit der Küchenmaschine während eines Speisenzubereitungsvorgangs manuelle Aktionen des Benutzers erfordern kann oder nicht. Bei einer teilautomatisierten Speisenzubereitung arbeitet ein Benutzer mithilfe einer Benutzerschnittstelle zur Kommunikation mit der Steuerungseinrichtung gemeinsam mit der Küchenmaschine Rezeptschritte eines digitalen Rezeptes ab, wobei der Benutzer beispielsweise angewiesen, eine Zutat in das Speisenzubereitungsgefäß zu geben und/oder die Küchenmaschine die Zutat durch Erhitzen, Dampfgaren, Zerkleinern und/oder Mischen bearbeitet. Insbesondere beinhalten ein oder mehrere Rezeptschritte eine oder mehrere manuelle Aktionen des Benutzers, die dem Benutzer über die Benutzerschnittstelle insbesondere Schritt-für-Schritt angezeigt werden. Insbesondere kann der Benutzer bei einem teilautomatisierten Speisenzubereitungsvorgang über eine Benutzerschnittstelle dazu aufgefordert werden, ein Starten eines Erhitzens, Dampfgarens, Zerkleinerns und/oder Mischens mit von der Steuerungseinrichtung vorgegebenen oder vorgeschlagenen Werten für die Kochparameter zu bestätigen. Bevorzugt kann der Benutzer bei einer teilautomatisierten Speisenzubereitung über eine Benutzerschnittstelle dazu aufgefordert werden, nach Fertigstellung mindestens eines Rezeptschrittes eine weitere Zutat in das Speisenzubereitungsgefäß hinzuzufügen und/oder die Verarbeitung der Speise in dem Speisenzubereitungsgefäß durch Einstellen oder Bestätigen einer anderen Drehzahl oder Temperatur fortzusetzen. Vorzugsweise ist ein Touchscreen-Display vorgesehen, über das der Benutzer eine Anweisung von der Steuerungseinrichtung für eine manuelle Aktion erhält, die für den aktuellen Rezeptschritt erforderlich ist, und/oder über das der Benutzer die oben erwähnte Bestätigung oder eine Eingabe an die Steuerungseinrichtung tätigen kann. Insbesondere kann eine Eingabe das Aktivieren eines Pausenmodus beinhalten.

Erfindungsgemäß ist ein Pausenmodus vorgesehen und die Küchenmaschine ist so eingerichtet, dass in dem Pausenmodus eine dem Heizelement zugeführte Energie, eine Drehzahl des Werkzeugs und/oder ein Drehmoment des Werkzeugs in Abhängigkeit von einem Überwachungsergebnis reduziert werden können, so dass es im Falle einer solchen Reduzierung zu einer Abweichung bei mindestens einem Kochparameter verglichen mit dem vom digitalen Rezept festgelegten Wert kommt. Insbesondere beinhaltet ein Überwachungsergebnis ein Vorsehen eines Überwachungswertebereiches und/oder ein Erfassen mindestens eines Überwachungsparameters, bevorzugt eine Speisentemperatur oder eine Drehzahl des Werkzeugs. Insbesondere wird wenigstens durch eine Aktivierung des Pausenmodus ein Erfassen des mindestens einen Überwachungsparameter und/oder ein Vergleichen des Überwachungsparameters mit dem Überwachungswertebereich ausgelöst oder veranlasst. Insbesondere beinhaltet das Überwachungsergebnis, ob der Überwachungsparameter in dem Überwachungswertebereich liegt oder nicht. Wenn das Überwachungsergebnis dies verneint, wird mindestens ein Kochparameter verglichen mit dem vom digitalen Rezept festgelegten Wert beim Wechsel von dem Kochmodus in den Pausenmodus nicht reduziert. Es kann also je nach Überwachungsergebnis vorkommen, dass durch den Wechsel vom Kochmodus in den Pausenmodus weder die Drehzahl des Werkzeugs, noch die dem Heizelement zugeführte Energie reduziert wird. Vorzugsweise zählen zu den Überwachungsparametern die Drehzahl des Werkzeugs, die Speisentemperatur, ein Gewicht anhand eines Gewichtsignals mindestens eines Gewichtssensors, der Deckel-Verriegelungszustand (verriegelt oder entriegelt), der Deckel-Auflagezustand (Deckel liegt auf oder nicht) und/oder der Gefäß-Verriegelungszustand (verriegelt oder entriegelt). Bevorzugt wird im Pausenmodus die Drehzahl des Werkzeugs auf 200 U/min (oder eine Drehzahl zwischen 50 und 250 U/min) reduziert, wenn die Drehzahl zuvor im Kochmodus zum Zeitpunkt der Aktivierung des Pausenmodus über 200 U/min (bzw. größer 250 U/min) lag und der Deckel-Auflagezustand aktuell anzeigt, dass der Deckel auf dem Speisenzubereitungsgefäß aufliegt. Weil in diesem Fall bejaht das Überwachungsergebnis, dass die beiden genannten Überwachungsparameter in den jeweiligen Überwachungswertebereichen liegen. In diesem Fall kommt es also zu einer Reduzierung und folglich zu einer Abweichung bei mindestens einem Kochparameter verglichen mit dem vom digitalen Rezept festgelegten Wert. Bevorzugt ist das Überwachungsergebnis negativ und es erfolgt keine Reduzierung der dem Heizelement zugeführten Energie oder der Drehzahl des Werkzeugs, wenn zum Zeitpunkt der Aktivierung des Pausenmodus eine Drehzahl des Werkzeugs von Null vorliegt, so dass die Drehzahl des Werkzeugs als Überwachungsparameter nicht in einen Überwachungswertebereich von größer Null fällt. Insbesondere ist in diesem Fall das Überwachungsergebnis unabhängig von dem Deckel-Verriegelungszustand und/oder Deckel-Auflagezustand. In einer Ausgestaltung wird im Pausenmodus bevorzugt von der Steuerungseinrichtung geprüft, ob die Soll-Temperatur oder Speisentemperatur eine vordefinierte Grenztemperatur unterschreitet, die insbesondere 100°C oder 93°C, bevorzugt ca. 95°C beträgt. Insbesondere wird in Abhängigkeit davon, ob die Grenztemperatur unterschritten ist oder nicht, mindestens einer der Kochparameter (insbesondere die Drehzahl, das Drehmoment, die dem Heizelement zugeführte Energie und/oder die Soll-Temperatur) angepasst oder nicht. Insbesondere im Falle des Unterschreitens der Grenztemperatur wird bevorzugt die Drehzahl des Werkzeugs auf eine Drehzahl zwischen 25 und 250 U/min reduziert, ein Drehmoment auf einen Wert größer Null reduziert und/oder eine dem Heizelement zugeführte Energie auf einen Wert größer Null reduziert. Insbesondere im Falle des Unterschreitens der Grenztemperatur wird mindestens einer der Kochparameter nicht verändert, z.B. die Soll-Temperatur oder die dem Heizelement zugeführte Energie.

Eine Aktivierung des Pausenmodus während des Kochmodus führt dazu, dass vom Kochmodus in den Pausenmodus gewechselt wird. Insbesondere erfolgt die Aktivierung des Pausenmodus durch eine Eingabe des Benutzers über die Benutzerschnittstelle, durch Anheben des Deckels vom Speisenzubereitungsgefäßes durch den Benutzer (insbesondere detektiert durch einen Deckelsensor zum Erfassen des Deckel-Auflagezustands) und/oder durch Anheben des Speisenzubereitungsgefäßes aus einer Aufnahme der Küchenmaschine (insbesondere detektiert durch einen Gefäßsensor). In einer Ausgestaltung erfolgt die oder eine Eingabe des Benutzers über die Benutzerschnittstelle durch eine Spracheingabe an der Küchenmaschine oder durch eine Sprachsteuerung remote an einem mobilen Benutzergerät oder SmartSpeaker. Diese Ausgestaltung kann auf alle Ausführungsformen mit einer Eingabe des Benutzers über die Benutzerschnittstelle sowie auf den folgenden Absatzes angewendet werden. Insbesondere ist der SmartSpeaker ein Gerät mit einem Lautsprecher, Mikrofon und/oder Funkschnittstelle zur Datenübertragung (z.B. via wlan und/oder Bluetooth). In einer Ausgestaltung kann ein mobiles Benutzergerät zur Spracheingabe durch einen Benutzer und/oder Sprachausgabe an einen Benutzer ein Gerät sein, das eine Spracheingabe empfangen und/oder an die Küchenmaschine übermitteln kann und/oder eine Sprachausgabe an einen Benutzer ausgeben und/oder von der Küchenmaschine zur Ausgabe empfangen kann. Bevorzugt kann ein solches Gerät eine Sprachfernbedienung mit einem Mikrofon und/oder Lautsprecher, ein Streaming-Media-Adapter mit einer über Funk verbundenen Sprachfernbedienung, ein Fernseher mit Sprachsteuerungsfunktionalität oder ein Küchenmaschinenzubehörgerät sein.

Eine anschließende Reaktivierung des Kochmodus während des Pausenmodus führt dazu, dass vom Pausenmodus zurück in den Kochmodus gewechselt wird. Insbesondere erfolgt die Reaktivierung des Kochmodus durch eine Eingabe des Benutzers über die Benutzerschnittstelle, durch Auflegen des Deckels zurück auf das Speisenzubereitungsgefäßes durch den Benutzer (insbesondere detektiert durch einen Deckelsensor zum Erfassen des Deckel-Auflagezustands) und/oder durch Absetzen des Speisenzubereitungsgefäßes zurück in eine Aufnahme der Küchenmaschine (insbesondere detektiert durch einen Gefäßsensor).

In einer Ausführungsform ist oder umfasst die mindestens eine Messgröße eine Pausendauer, eine Speisentemperatur, ein Gewichtsignal mindestens eines Gewichtssensors und/oder ein Motorlastsignal eines Antriebs für das Werkzeug. Eine Änderung des Speisenzubereitungsvorgangs und/oder der Speise infolge eines Wechsels von dem Kochmodus in den Pausenmodus und zurück in den Kochmodus kann hierdurch derart ermittelt werden, dass besonders zuverlässig durch die Steuerungseinrichtung beurteilt werden kann, ob eine Anpassung eines Kochparameters oder mehrerer Kochparameter im Hinblick auf das Entgegenwirken einer Verschlechterung des Kochergebnisses benötigt wird oder nicht. In einer Ausgestaltung, in der mehrere Messgrößen vorgesehen sind, ist die erste Messgröße die Pausendauer, die gemeinsam mit einer zweiten Messgröße, insbesondere die Speisentemperatur, das Gewichtsignal und/oder die Motorlastsignal, für die Ermittlung der Änderung anhand von hinterlegten Bedingungen verarbeitet werden. Bevorzugt wird jeweils ein Gewichtssignal von mehreren Gewichtssensoren erfasst, um daraus als Messgröße eine Schwankungsamplitude und/oder Unwucht zu ermittelt. Dies ermöglicht die Ermittlung einer Änderung der Konsistenz oder Viskosität der Speise.

In einer Ausführungsform ist die Steuerungseinrichtung so eingerichtet ist, dass die Messgröße (z.B. in Form der von dem Speisentemperatursensor gemessenen Speisentemperatur) zum Zeitpunkt der Aktivierung (oder getriggert durch die Aktivierung) des Pausenmodus und/oder zum Zeitpunkt der Reaktivierung (oder getriggert durch die Reaktivierung) des Kochmodus gemessen und/oder für die Ermittlung der Änderung (des Speisenzubereitungsvorgangs und/oder der Speise infolge eines Wechsels von dem Kochmodus in den Pausenmodus und zurück in den Kochmodus) verarbeitet wird. Es ist also in einer Ausgestaltung möglich, dass die Messgröße kontinuierlich erfasst wird, jedoch nur die Messwerte der Messgröße zu den oben genannten Zeitpunkten von der Steuerungseinrichtung zur Ermittlung der Änderung berücksichtigt werden. In einer alternativen oder ergänzenden Ausgestaltung ist es möglich, die Messgröße nur zu den genannten Zeitpunkten zu messen, um für die Ermittlung der Änderung verarbeitet zu werden. In einer Ausgestaltung ist es möglich, dass die Steuerungseinrichtung zu mindestens einem der genannten Zeitpunkte eine Ausgabe eines akustischen und/oder optischen Signals vorzugsweise über eine Benutzerschnittstelle der Küchenmaschine veranlasst oder durchführt. Insbesondere kann das akustische Signal ein Signalton und/oder eine Sprachausgabe sein. Vorzugsweise kann eine Sprachausgabe remote über ein mobiles Benutzergerät oder SmartSpeaker realisiert werden. Bevorzugt dient die Ausgabe einer Aufforderung an den Benutzer zum Aufsetzen des Deckels, einer Aufforderung an den Benutzer zum Drücken eines Knopfes zum Beispiel für ein Bestätigen oder für ein Starten eines Vorgangs (z.B. Werkzeug oder Heizelement aktivieren).

Insbesondere kann der Zeitpunkt der Aktivierung bzw. Reaktivierung in einen Zeitbereich fallen. Insbesondere kann sich der Zeitbereich über die Zeitspanne während eines Wechsels und/oder eine kurze Zeit davor und/oder danach erstrecken. Beispielsweise kann sich der Zeitbereich auf ±5 Sekunden um einen Wechsel und/oder eine Aktivierung bzw. Reaktivierung erstrecken. Wenn eine Messgröße kontinuierlich gemessen wird, ist es somit möglich, dass ein Messwert kurz vor und/oder nach einem Wechsel (jedoch innerhalb des Zeitbereichs) für die Ermittlung der Änderung verarbeitet werden.

In einer Ausgestaltung wird die Speisentemperatur mithilfe eines Temperatursensors kontinuierlich gemessen. Hieraus erwachsen vielfältige Möglichkeiten im Rahmen der Ermittlung der Änderung und/oder einer Anpassung des Speisenzubereitungsvorgangs nach der Reaktivierung des Kochmodus.

Insbesondere ist die Pausendauer eine Zeitspanne zwischen dem Wechsel von dem Kochmodus in den Pausenmodus und dem Wechsel von dem Pausenmodus zurück in den Kochmodus.

In einer Ausführungsform ist eine Mindestpausendauer (in der Steuerungseinrichtung oder im digitalen Rezept) hinterlegt und die Steuerungseinrichtung ist so eingerichtet, dass der Speisenzubereitungsvorgang nach der Reaktivierung des Kochmodus unverändert fortgesetzt werden kann, wenn die Pausendauer kürzer als die Mindestpausendauer ist. Bevorzugt ist die Mindestpausendauer eine Anpassungsprüfungsinformation, die weiter unten in diesem Dokument noch genauer beschrieben wird. In einer Ausgestaltung liegt die Mindestpausendauer zwischen 1 Sekunde und 2,5 Minuten. Bevorzugt beträgt die Mindestpausendauer ungefähr 1 Minute.

In einer speziellen Ausgestaltung hat die Mindestpausendauer einen Wert zwischen 1,5 Minuten und 2 Minuten. In einer Ausgestaltung, bevorzugt in der speziellen Ausgestaltung, ist die Steuerungseinrichtung so eingerichtet, dass ein akustisches und/oder optisches Signal (für ein Auffordern des Benutzers zum Aufsetzen des Deckels oder Betätigen der Benutzerschnittstelle zum Bestätigen oder Aktivieren z.B. des Werkzeugs oder Heizelements) vorzugsweise über die Benutzerschnittstelle der Küchenmaschine ausgegeben wird, wenn der Pausenmodus vom Benutzer über eine Benutzerschnittstelle aktiviert wurde und die Pausendauer die Mindestpausendauer erreicht. In dieser speziellen Ausgestaltung ist insbesondere vorgesehen, dass ein Benutzer durch ein bloßes Auflegen des Deckels (ohne eine weitere Maßnahme oder Bestätigung) auf das Speisenzubereitungsgefäß den Wechsel vom Pausenmodus zurück in den Kochmodus veranlassen kann, solange die Pausendauer die Mindestpausendauer noch nicht erreicht hat. Das akustische und/oder optische Signal wird dann nicht ausgegeben.

Ein unverändertes Fortsetzen des Speisenzubereitungsvorgangs im Kochmodus nach der Reaktivierung des Kochmodus bedeutet, dass keine Anpassung von Kochparametern vorgenommen werden. Bevorzugt kann das unveränderte Fortsetzen ein Ergebnis der Ermittlung einer Anpassungsermittlungseinheit sein, die weiter unten in diesem Dokument noch genauer beschrieben wird.

In der Ausgestaltung, in der die Zeitdauer für ein Erhitzen, Dampfgaren, Zerkleinern oder Mischen der Kochparameter ist oder als einer von mehreren Kochparametern vorgesehen ist, bedeutet ein unverändertes Fortsetzen des Speisenzubereitungsvorgangs für den Fall eines Aktivierens des Pausenmodus während die Speise für eine Zeitdauer erhitzt, zerkleinert oder gemischt wird, dass die Pausendauer bei der Zeitdauer des aktuelle durchgeführten Rezeptschrittes nicht berücksichtigt wird. Mit anderen Worten wird eine Uhr oder Zeitmessung für die Zeitdauer zum Zeitpunkt der Aktivierung angehalten und zum Zeitpunkt der Reaktivierung fortgesetzt.

Wenn beispielsweise eine Zeitdauer von 5 Minuten nach 3 Minuten durch eine Aktivierung des Pausenmodus unterbrochen wird und nach 1 Minute die Reaktivierung des Kochmodus erfolgt, zeigt die Uhr oder Zeitmessung für die Zeitdauer zum Zeitpunkt der Reaktivierung immer noch 3 Minuten an, obwohl seit dem ursprünglichen Beginn der Zeitdauer in Wirklichkeit 4 Minuten vergangen sind.

In einer Ausführungsform ist die Steuerungseinrichtung so eingerichtet, dass der Speisenzubereitungsvorgang unverändert nach der Reaktivierung des Kochmodus fortgesetzt werden kann, wenn der aktuelle durchgeführte Rezeptschritt kein Erhitzen beinhaltet, ausschließlich ein Zerkleinern (und gleichzeitig Mischen) beinhaltet und/oder eine Freigabe zum unveränderten Fortsetzen im Falle eines Wechsels in den Pausenmodus und zurück in den Kochmodus im digitalen Rezept oder dem Rezeptschritt hinterlegt ist. Ein automatisiertes Anpassen des Speisenzubereitungsvorgangs kann auf diese Weise eingespart werden, ohne das Erzielen eines akzeptablen Kochergebnisses zu gefährden. Eine Freigabe zum unveränderten Fortsetzen im digitalen Rezept oder Rezeptschritt ist bevorzugt eine Anpassungsprüfungsinformation, auf die weiter unten im Dokument noch genauer eingegangen wird.

Ein Zerkleinern einer Zutat kann beispielsweise selbst nach einer längeren Pausendauer nach Reaktivierung des Kochmodus unverändert fortgesetzt werden, ohne dass dies Einfluss auf das Zerkleinerungsergebnis hat. Bei einem Mischvorgang kann es in Abhängigkeit von der Speise dazu kommen, dass eine Pause dazu führt, dass sich die Konsistenz der Speise verändert (z.B. ein Teig wird zäher oder eine mit Speisestärke versehene Flüssigkeit wird fester), so dass der Mischvorgang nicht in jedem Fall nach der Reaktivierung des Kochmodus weiter gemischt werden kann, ohne das Kochergebnis signifikant zu beeinträchtigen. Hierzu kann vorgesehen sein, eine entsprechende Anpassungsprüfungsinformation im digitalen Rezept oder einem betroffenen Rezeptschritt des digitalen Rezeptes zu hinterlegen, so dass beispielsweise keine Freigabe für ein unverändertes Fortsetzen der Speisenzubereitung möglich ist, sondern ein Anpassen des Speisenzubereitungsvorgangs nach einer Reaktivierung des Kochmodus. Insbesondere kann die Anpassungsprüfungsinformation beinhalten, welcher oder welche Kochparameter in welcher Weise nach der Reaktivierung des Kochmodus anzupassen sind.

Eine Pause während eines Erhitzungsvorgangs führt regelmäßig in Abhängigkeit von Zuständen während des Pausenmodus (z.B. Deckel abgenommen; Soll-Speisentemperatur reduziert) zu einer Reduzierung der Speisentemperatur, so dass eine im Hinblick auf die Qualität des Kochergebnisses erforderliche Zeitdauer der Erhitzung nicht durch ein unverändertes Fortsetzen der Speisenzubereitung nach einer Reaktivierung des Kochmodus gewährleistet werden kann. In einer Ausgestaltung ist vorgesehen, dass eine Pause während eines Erhitzungsvorgangs mit einer Speisentemperatur oder Soll-Temperatur von weniger als einem vordefinierten Wert zwischen bevorzugt 93°C und 100°C dazu führt, dass das Heizelement zunächst unverändert weiterbetrieben wird oder die Soll-Temperatur insbesondere auf einen Wert größer Null reduziert wird.

In einer Ausführungsform kann ein digitales Rezept oder ein Rezeptschritt eine Sperrinformation enthalten und die Steuerungseinrichtung ist so eingerichtet, dass im Falle des Vorliegens der Sperrinformation in einem aktuell durchgeführten Rezeptschritt keine Aktivierung des Pausenmodus zugelassen wird. Es kann bei besonders sensiblen Speisenbearbeitungsprozessen verhindert werden, dass für das Kochergebnis wichtige Prozesse wie zum Beispiel Schokoladenkristallbildung oder Emulsionsbildung bei der Mayonnaise-Zubereitung aufgrund einer Pause gestört werden.

In einer Ausführungsform ist die Steuerungseinrichtung so konfiguriert, dass unabhängig von dem digitalen Rezept die Speise mithilfe des Werkzeugs nach einer Reaktivierung des Kochmodus im Anschluss an einen Pausenmodus durchmischt wird (und/oder die Heizleistung reduziert wird, z.B. durch ein geändertes Heizprofil für die dem Heizelement zugeführte Energie mit einer reduzierten Heizleistung und/oder Soll-Temperatur), wenn bei oder vor der zuvor erfolgten Aktivierung des Pausenmodus die Speise erhitzt worden war. Abgekühlte Teile der Speise können auf diese Weise besonders schnell durch die Wärme der übrigen Speise erwärmt werden, Speisenzubereitungszeit eingespart werden und einem negativen Einfluss des Pausenmodus auf das Kochergebnis entgegengewirkt werden. Vorzugsweise ist das Durchmischen bei Erfüllen der oben genannten Bedingung als ein Automatismus hinterlegt oder als eine Maßnahme als Ergebnis einer Ermittlung einer Anpassung des Speisenzubereitungsvorgangs durch eine Anpassungsermittlungseinheit (auf die im Folgenden näher eingegangen wird), insbesondere bei Festlegung eines Zielparameters mit einer Variante "schnellstmögliche Speisenzubereitung", auf die ebenfalls weiter unten näher eingegangen wird. Vorzugsweise ist eine Drehrichtung für das Durchmischen so orientiert, dass das Werkzeug mit nur stupfen Kanten (also nicht mit einer Schneide oder Messer zum Zerkleinern) voran bewegt wird. Insbesondere beträgt die Drehzahl des Werkzeugs für das Durchmischen maximal 200 U/min. Vorzugsweise beträgt die Dauer des Durchmischens mindestens 3 Sekunden und/oder höchstens 100 Sekunden.

In einer Ausführungsform umfasst die Steuerungseinrichtung eine Anpassungsprüfungseinheit und/oder ist so eingerichtet, dass im Falle der Aktivierung des Pausenmodus die Anpassungsprüfungseinheit auf Basis der ermittelten Änderung des Speisenzubereitungsvorgangs und/oder der Speise infolge eines Wechsels von dem Kochmodus in den Pausenmodus und zurück in den Kochmodus ermittelt, ob der Speisenzubereitungsvorgang nach der Reaktivierung des Kochmodus anzupassen ist oder nicht. Ressourcen und Energie können so eingespart werden. Insbesondere berücksichtigt die Anpassungsprüfungseinheit dazu Informationen des digitalen Rezeptes, mindestens eines Rezeptschrittes und/oder des aktuell durchgeführten Rezeptschrittes, erfasste Werte der Messgröße (insbesondere Pausendauer, Messwerte der Speisentemperatur aus kontinuierlicher Messung während des Pausenmodus oder von verschiedenen Zeitpunkten der Wechsel, Gewichtsignale, Motorlastsignale, eine Information über eine Freigabe für ein unverändertes Fortsetzen, Speisentemperatur nach bereits erfolgter Durchmischung im Anschluss an die Reaktivierung des Kochmodus, Soll-Temperatur aus Rezeptschritt, Lebensmittelart oder Zusammensetzung der Lebensmittel der Speise aus Rezeptschritt, ermittelte Menge, Gewicht oder Volumen der Speise, die dem Heizelement zugeführte Energie, ermittelter Zustand oder ermittelte Konsistenz der Speise, Dauer der bereits durchgeführten Bearbeitung der erledigten Rezeptschritte und/oder der erledigte Teil des aktuellen Rezeptschrittes. In einer Ausgestaltung berücksichtigt die Anpassungsprüfungseinheit einen Zielparameter. Insbesondere kann der Zielparameter durch den Benutzer über die Benutzerschnittstelle oder durch das digitale Rezept festgelegt werden. Vorzugsweise kann der Zielparameter auf eine Variante "schnellstmögliche Speisenzubereitung" oder "bestmöglichste Speisenzubereitungsdauereinhaltung" festgelegt werden. In einer alternativen oder ergänzenden Ausgestaltung kann der Zielparameter undefiniert bleiben oder vom Benutzer der Zielparameter "undefiniert" ausgewählt werden, wenn keine Festsetzung für eine vordefinierte Variante erfolgt oder erfolgen soll. In einer alternativen oder ergänzenden Ausgestaltung kann der Zielparameter auf eine Variante "Energiesparen" festgelegt werden. In einer alternativen oder ergänzenden Ausgestaltung kann der Zielparameter auf eine Variante "möglichst unverändert fortsetzen" festgelegt werden, so dass beispielsweise nach Reaktivierung des Kochmodus keine oder nur so wenig Anpassungen erfolgen wie möglich. Insbesondere wenn keine Anpassungen erfolgen, werden stattdessen vorgeschlagene Anpassungen über die Benutzerschnittstelle an den Benutzer ausgegeben, damit der Benutzer selber entscheiden kann, ob oder welche Anpassungsmaßnahmen durchgeführt werden. Insbesondere während des Pausenmodus werden auch bei dem Zielparameter "möglichst unverändert fortsetzen" in bestimmten Fällen Anpassungen vorgenommen, z.B. die Drehzahl und das Drehmoment des Werkzeugs zum Mischen oder Zerkleinern bei geöffnetem Deckel reduziert.

Insbesondere kommt die Anpassungsprüfungseinheit zu einem Ergebnis. Vorzugsweise ist das Ergebnis ein Vorliegen oder Nicht-Vorliegen eines Anpassungsbedarfes. Insbesondere sind mögliche Ergebnisse ein unverändertes Fortsetzen des Speisenzubereitungsvorgangs im Kochmodus (nach der Reaktivierung des Kochmodus) oder ein Anpassen des Speisenzubereitungsvorgangs im Kochmodus (nach der Reaktivierung des Kochmodus). Insbesondere kann das Ergebnis eines Anpassens durch die Anpassungsprüfungseinheit konkretisiert werden zur Anpassung eines Kochparameters oder ein Anpassen mehrerer Kochparameter nach der Reaktivierung des Kochmodus.

In einer Ausführungsform umfasst die Steuerungseinrichtung eine Anpassungsermittlungseinheit und/oder ist so eingerichtet, dass im dem Fall, dass die Anpassungsprüfungseinheit ermittelt (also ein Ergebnis ausgibt), dass nach der Reaktivierung des Kochmodus der Speisenzubereitungsvorgang anzupassen ist, die Anpassungsermittlungseinheit einen geänderten Wert für den Kochparameter oder geänderte Werte für die Kochparameter zur Anpassung des Speisenzubereitungsvorgangs nach der Reaktivierung des Kochmodus ermittelt. Mit anderen Worten ermittelt die Anpassungsermittlungseinheit, welcher geänderter Wert für welchen Kochparameter zur Anpassung eingesetzt werden soll. In einer Ausgestaltung kann die Anpassungsermittlungseinheit im Fall von mehreren Kochparametern alternativ oder ergänzend ermitteln, welcher Kochparameter der mehreren Kochparameter geändert werden soll und/oder welcher Kochparameter unverändert bleiben soll. In einer Ausgestaltung ist die Anpassungsprüfungseinheit oder Teile davon auf einem externen Server realisiert, so dass die Steuerungseinrichtung der Küchenmaschine die oben beschriebene Ermittlung auf einem externen Server durchführt oder durchführen lässt. Die Steuerungseinrichtung sendet dann lediglich Input-Daten an den externen Server und erhält das Ergebnis oder die Ergebnisse zurück. Rechenkapazität kann so für die Küchenmaschine gespart und die Ermittlungsprozeduren auf dem externen Server zentral verwaltet werden.

In einer Ausführungsform ist die Steuerungseinrichtung so konfiguriert, dass ein Zielparameter mit mehreren, alternativen Varianten von der Anpassungsprüfungseinheit und/oder der Anpassungsprüfungseinheit berücksichtigt wird. Dies erhöht den Komfort und die Flexibilität für die Benutzer.

In einer Ausführungsform ist die Steuerungseinrichtung so konfiguriert, dass der Zielparameter für eine schnellstmögliche Speisenzubereitung oder eine bestmögliche Speisenzubereitungsdauereinhaltung als alternative Varianten festgelegt werden kann.

Insbesondere wird die Anpassungsermittlungseinheit bei Festlegen des Zielparameters mit der Variante "schnellstmögliche Speisenzubereitung" die Anpassung des Speisenzubereitungsvorgangs nach Reaktivierung des Kochmodus (in einer Ausgestaltung zusätzlich schon während des Pausenmodus) in einer Weise vornehmen, dass eine angestrebte Zubereitungszeit einschließlich der Pausendauer insgesamt kürzer als die Dauer eines planmäßigen Speisenzubereitungsvorgangs (also ohne Pausenmodus) zuzüglich der Pausendauer ist. Bevorzugt wird hierzu in einer Ausgestaltung, in der die Speise zum Zeitpunkt der Aktivierung des Pausenmodus erhitzt wurde, der Speisenzubereitungsvorgang nach der Reaktivierung des Kochmodus im Anschluss an den Pausenmodus mit einer unveränderten dem Heizelement zugeführten Energie und/oder Soll-Temperatur (und/oder Heizungsprofil mit gleicher Heizleistung und/oder Soll-Temperatur) fortgeführt. Unverändert bzw. gleich bezieht sich auf den Zustand zum Zeitpunkt der Aktivierung des Pausenmodus. Durch ein Nachwärmen während des Pausenmodus selbst bei Reduzierung oder gar Unterbrechung der dem Heizelement zugeführten Energie wird die Speisenzubereitung hierdurch beschleunigt verglichen mit der Dauer eines planmäßigen Speisenzubereitungsvorgangs zuzüglich der Pausendauer.

Insbesondere wird die Anpassungsermittlungseinheit bei Festlegen des Zielparameters mit der Variante "bestmögliche Speisenzubereitungsdauereinhaltung" die Anpassung des Speisenzubereitungsvorgangs nach Reaktivierung des Kochmodus (in einer Ausgestaltung zusätzlich schon während des Pausenmodus) in einer Weise vornehmen, dass eine angestrebte Zubereitungszeit einschließlich der Pausendauer insgesamt (ungefähr) der Dauer eines planmäßigen Speisenzubereitungsvorgangs (also ohne Pausenmodus) zuzüglich der Pausendauer ist. Der Benutzer erhält auf diese Weise eine größtmögliche Planungssicherheit. Bevorzugt wird hierzu in einer Ausgestaltung, in der die Speise zum Zeitpunkt der Aktivierung des Pausenmodus erhitzt wurde, der Speisenzubereitungsvorgang nach der Reaktivierung des Kochmodus im Anschluss an den Pausenmodus mit einer reduzieren Energiezufuhr zum Heizelement und/oder einer reduzierten Soll-Temperatur (und/oder ein reduziertes Heizungsprofil mit insbesondere einer reduzierten Heizleistung und/oder Soll-Temperatur) fortgeführt. In einer Ausgestaltung wird entsprechend mit einer reduzierten Drehzahl oder mit einer anderen Drehrichtung mit stumpfen Kanten des Werkzeugs voraus der Speisenzubereitungsvorgang fortgesetzt. Reduziert bezieht sich auf den Zustand zum Zeitpunkt der Aktivierung des Pausenmodus. Weil durch ein Nachwärmen bzw. Drehen des Werkzeugs während des Pausenmodus selbst bei Reduzierung oder gar Unterbrechung der dem Heizelement zugeführten Energie oder der Drehzahl des Werkzeugs die Speisenzubereitung in gewisser Weise nicht stillsteht, kann auf diese Weise die Speisenzubereitung nach der Reaktivierung des Kochmodus im Anschluss an den Pausenmodus gewissermaßen verlangsamt werden, um zu erreichen, dass am Ende die Dauer der Fertigstellung ungefähr der Dauer eines planmäßigen Speisenzubereitungsvorgangs zuzüglich der Pausendauer entspricht.

In einer Ausgestaltung wird der Zustand des Kochvorgangs zu dem Zeitpunkt der Aktivierung des Pausenmodus bestimmt und mit dem Zustand, der bei der Reaktivierung des Kochmodus vorliegt, verglichen, um daraus abzuleiten und zu ermitteln, ob und wie der Kochvorgang nach der Reaktivierung des Kochmodus im Anschluss an den Pausenmodus angepasst fortgeführt werden soll. In einer Ausgestaltung kann es dazu nötig sein, dass nach der Reaktivierung des Kochmodus zuerst eine Durchmischung der Speise in dem Speisenzubereitungsgefäß durchgeführt wird, insbesondere durch Drehen des Werkzeugs. Vorzugsweise wird das Werkzeug so lange gedreht, bis die Speise so durchmischt ist, dass es zu einer gleichmäßigen Temperaturverteilung kommt. In einer Ausgestaltung kann eine gleichmäßigen Temperaturverteilung der Speise im Speisenzubereitungsgefäß erkannt werden, indem ein zeitlich aufgelöster Verlauf der Speisentemperatur während der Durchmischung eine Schwankung aufweist, die kleiner als ein vordefinierter Schwankungsschwellwert ist.

In einer Ausgestaltung ist die Steuerungseinrichtung so eingerichtet ist, dass ein (vom Rezeptschritt oder durch die Anpassungsermittlungseinheit festgelegte) Temperaturschwellwert - insbesondere ein Wert zwischen 90°C und 100°C, bevorzugt ca. 98°C - mit einer während des Pausenmodus kontinuierlich erfassten Speisentemperatur verglichen wird. In einer Ausgestaltung ist vorgesehen, auf basierend auf dem Vergleich der Speisentemperatur mit der Temperaturschwellwert eine Unterschreitungsdauer mit (oder beinhaltend) die Zeit einer Unterschreitung des Temperaturschwellwertes durch die Speisentemperatur während des Pausenmodus zu ermitteln. In einer Ausgestaltung wird nach der Reaktivierung des Kochmodus die restliche Zeit der Zeitdauer des Erhitzungsvorgangs des aktuellen Rezeptschrittes um die Unterschreitungsdauer verkürzt, insbesondere als Anpassung des Speisenzubereitungsvorgangs, vorzugsweise ermittelt durch die Anpassungsermittlungseinheit. Auf diese Weise kann die Speisenzubereitung beschleunigt werden verglichen mit einem unveränderten Fortsetzen nach Reaktivierung des Kochmodus. Insbesondere wird diese Ausgestaltung angewendet, wenn der Zielparameter auf die Variante "schnellstmögliche Speisenzubereitung" festgelegt ist. Bevorzugt wird eine Restzeit bzw. die restliche Zeit (insbesondere der Zeitdauer des Erhitzungsvorgangs des aktuellen Rezeptschrittes) mittels einer Zeitanzeige angezeigt, insbesondere unter Berücksichtigung der Anpassung des Speisenzubereitungsvorgangs, so dass sich die angezeigte Restzeit z.B. verkürzt.

In einer Ausführungsform kann ein digitales Rezept oder ein Rezeptschritt eine Anpassungsprüfungsinformation und/oder eine Anpassungsinformation enthalten.

In einer Ausführungsform ist die Steuerungseinrichtung so eingerichtet, dass im Falle einer Aktivierung des Pausenmodus die Anpassungsprüfungsinformation zur Ermittlung des Ergebnisses bzw. des Vorliegens oder Nicht-Vorliegens eines Anpassungsbedarfes des Speisenzubereitungsvorgangs berücksichtigt wird, insbesondere durch die Anpassungsprüfungseinheit.

In einer Ausführungsform ist die Steuerungseinrichtung so eingerichtet, dass im Falle einer Aktivierung des Pausenmodus die Anpassungsinformation bei einer Ermittlung einer benötigten Anpassung des Speisenzubereitungsvorgangs berücksichtigt wird, insbesondere durch die Anpassungsermittlungseinheit.

Die Anpassung des Speisenzubereitungsvorgang kann auf diese Weise nach Reaktivierung des Kochmodus in einer optimierten Weise erfolgen. In einer Ausgestaltung kann vorgesehen sein, dass die Anpassungsinformation für eine Ermittlung mindestens einer Änderung des Betriebs, der Vorgänge und/oder mindestens eines Kochparameters während des Pausenmodus berücksichtigt werden kann, beispielsweise zur Festlegung einer reduzierten Drehzahl des Werkzeugs oder reduzierten Zufuhr von Energie zum Heizelement. In einer Ausgestaltung ist vorgesehen, dass unter Berücksichtigung des Zielparameters bereits während des Pausenmodus der Speisenzubereitungsvorgang entsprechend angepasst wird, z.B. um die Speisenzubereitung zu beschleunigen, zu verlangsamen oder Energie zu sparen. Die Maßnahmen können analog zu den Maßnahmen nach Reaktivierung des Kochmodus sein, insbesondere mit dem Unterschied, dass zusätzliche Bedingungen greifen, die einen Deckelauflage-Zustand berücksichtigen. Insbesondere ist vorgesehen, dass im Pausenmodus die Drehzahl des Werkzeugs auf Null oder auf max. 200 U/min reduziert wird bei dem Deckel-Auflagezustand "Deckel liegt nicht auf".

In einer Ausgestaltung ist vorgesehen, dass wenn sich zum Zeitpunkt der Aktivierung des Pausenmodus die Speise in einem erhitzen Zustand befindet (insbesondere von der Steuerungseinrichtung ermittelt anhand des digitalen Rezeptes, der Speisentemperatur und/oder der Anpassungsinformation), der Betrieb während des Pausenmodus in einer Weise geändert wird, dass der ablaufende Garprozess oder temperaturgebundene Bearbeitungsprozess der Speise während des Pausenmodus durch Veranlassen mindestens einer Maßnahme unterstützt wird, insbesondere unter gezielter Ausnutzung einer in der Speise zum Zeitpunkt der Aktivierung des Pausenmodus vorhandenen Restwärmeenergie, obwohl während des Pausenmodus weniger oder keine Energie dem Heizelement zum Erhitzen der Speise zugeführt wird. In einer Ausgestaltung kann die mindestens eine Maßnahme mindestens eine der Folgenden sein: Drehen des Werkzeugs in eine Drehrichtung mit stumpfen Kanten des Werkzeugs voran; Drehen des Werkzeugs mit einer Drehzahl größer als Null; Versorgen des Heizelements mit einer Energie größer Null, jedoch mit reduzierter Energie oder Soll-Temperatur verglichen mit einer Vorgabe eines aktuellen Rezeptschrittes.

Insbesondere hat das drehbare Werkzeug mindestens einen sich vorzugsweise radial erstreckenden Arm, der in eine Drehrichtung eine Schneide oder Schneidkante zum Zerkleinern und/oder in die andere Drehrichtung eine stumpfe Kante hat.

Eine spezielle Ausgestaltung, die auch ein eigenständiger Aspekt sein kann, sieht eine Schnell-Zugriff-Funktion vor, mithilfe der ein Benutzer den Pausenmodus manuell über eine Benutzerschnittstelle (der Küchenmaschine) auswählen kann, z.B. über ein Touchscreen-Display, eine Spracheingabe an der Küchenmaschine oder remote via ein mobiles Benutzergerät oder SmartSpeaker. Es ist möglich, dass der Pausenmodus auf dem Touchscreen-Display als ein Modus mit einem Text, Namen oder Bildzeichen ohne den Wortbestandteil "Pause" oder lediglich mit einem Synonym oder einer Abwandlung davon angezeigt und/oder für den Benutzer auswählbar ist.

In einer alternativen Ausgestaltung oder ergänzenden Ausgestaltung insbesondere nach einem Auswählen des Pausenmodus über die Schnell-Zugriff-Funktion, die ebenfalls eigenständige Aspekt sein können, ist vorgesehen, dass eine Grenzpausendauer (die der Mindestpausendauer entsprechen kann) mit einem Wert zwischen 1,5 Minuten und 2 Minuten vordefiniert ist und/oder eine Grenztemperatur mit einem Wert zwischen 93°C und 100°C vordefiniert ist. Nach einer Auswahl des Pausenmodus durch den Benutzer insbesondere via Schnell-Zugriff-Funktion wird der Pausenmodus nur dann aktiviert (d.h., es wird von dem Kochmodus in den Pausenmodus gewechselt), wenn die Speisentemperatur (und/oder die Soll-Temperatur) unter der (in der Steuerungseinrichtung) vordefinierten Grenztemperatur liegt. Bevorzugt wird in diesem Fall das Heizelement weiterbetrieben, wenn das Heizelement zum Zeitpunkt der Aktivierung zum Erhitzen der Speise mit Energie versorgt wurde. Insbesondere kann in diesem Fall das Werkzeug mit reduzierter Drehzahl und/oder reduziertem Drehmoment, und/oder das Heizelement mit reduzierter Heizleistung durch Reduzieren der dem Heizelement zugeführten Energie während des Pausenmodus weiterbetrieben werden. Vorzugsweise ist nach dem Aktivieren des Pausenmodus vorgesehen, dass die Pausendauer überwacht wird, um mit der Grenzpausendauer verglichen zu werden.

Bevorzugt ist vorgesehen, dass der Benutzer durch ein bloßes Auflegen des Deckels auf das Speisenzubereitungsgefäß von dem Pausenmodus zurück in den Kochmodus wechseln kann (also ohne ein Betätigen einer Benutzerschnittstelle oder Spracheingabe), solange die aktuelle Pausendauer zum Zeitpunkt des Auflegens des Deckels geringer ist als die Grenzpausendauer.

Bevorzugt ist vorgesehen, dass ein akustisches und/oder optisches Signal an den Benutzer ausgegeben wird, wenn die aktuelle Pausendauer im Pausenmodus die Grenzpausendauer erreicht oder überschreitet, z.B. wenn der Benutzer länger braucht als die Grenzpausendauer, um den Deckel nach der Aktivierung des Pausenmodus wieder aufzusetzen. Es ist dann bevorzugt vorgesehen, dass ein Auflegen des Deckels alleine den Pausenmodus nicht beenden kann. Insbesondere erfolgt das akustische Signal zusammen dem optischen Signal. Insbesondere wird ein Hinweis auf einem Touchscreen-Display als die Benutzerschnittstelle ausgegeben oder via mindestens einem anderen optischen Element, z.B. integrierte LEDs, die aufleuchten können, und/oder ein akustisches Signal in Form eines Tons, einer Melodie oder einer Sprachausgabe. Bevorzugt umfasst das optische und/oder akustische Signal ein Text-Nachricht (z.B. auf dem Touchscreen-Display der Benutzerschnittstelle oder als Sprachausgabe) und/oder weist den Benutzer darauf hin, dass der Benutzer erneut eine Spracheingabe tätigen oder auf einen Knopf, Icon oder Bildzeichen drücken soll, z.B. mit dem Text oder der Bedeutung "Start". Sobald der Benutzer auf besagten Knopf, Icon oder Bildzeichen drückt (insbesondere durch Anklickten) oder die Spracheingabe getätigt hat, wird der Antrieb für das Werkzeug zum Mischen und/oder Zerkleinern für ein (schnelleres) Drehen aktiviert und/oder dem Heizelement wird zum Erhitzen der Speise (zusätzlich) Energie zugeführt. Insbesondere beginnt das Werkzeug wieder zu drehen und/oder das Erhitzen beginnt erneut mit der eingestellten Soll-Temperatur. Es ist auch möglich, dass die Heizung und/oder der Antrieb für das Werkzeug (falls das Werkzeug zu dem Zeitpunkt noch angetrieben wurde) ausgeschaltet werden. Insbesondere ist vorgesehen, dass zusätzlich ein Start-Befehl durch eine Benutzereingabe auf dem Touchscreen-Display erforderlich ist, um zurück in den Kochmodus zu wechseln und die Speisenzubereitung im Kochmodus fortzusetzen, wobei insbesondere auf dem Touchscreen-Display zum Zeitpunkt der erforderlichen Benutzereingabe des Start-Befehls eine Zeitanzeige, Drehzahl und/oder Soll-Temperatur angezeigt wird. Bevorzugt beinhaltet die Zeitanzeige eine angezeigte Restzeit und/oder eine Restzeit nach Berücksichtigung einer Anpassung.

Insbesondere ist vorgesehen, dass wenn die Speisentemperatur und/oder Soll-Temperatur über der Grenztemperatur liegt, wenn der Benutzer insbesondere via Schnell-Zugriff-Funktion den Pausenmodus auswählt, das Heizelement und der Antrieb für das Werkzeug gestoppt, deaktiviert oder nicht mehr mit Energie versorgt werden.

Insbesondere ist vorgesehen, dass ein akustisches und/oder optisches Signal (oder Hinweis) ausgegeben wird, kurz bevor während des Pausenmodus die Grenzpausendauer erreicht wird und/oder wenn Anpassungen an dem Speisenzubereitungsvorgang insbesondere unter Mithilfe des Benutzers durchzuführen sind.

Ein weiterer Aspekt betrifft ein Verfahren zum Durchführen eines Speisenzubereitungsvorgangs mit einer Küchenmaschine, insbesondere einer Küchenmaschine gemäß dem eingangs beschriebenen Aspektes der Erfindung, zum Erhitzen, Dampfgaren, Zerkleinern und/oder Mischen einer Speise in einem Speisenzubereitungsgefäß während eines Kochmodus gemäß Rezeptschritten eines (in einer Steuerungseinrichtung hinterlegten) digitalen Rezeptes, wobei das Verfahren folgende Schritte umfasst:
- Aktivieren eines Pausenmodus während des Kochmodus, so dass vom Kochmodus in den Pausenmodus gewechselt wird,
- Reaktivieren des Kochmodus während des Pausenmodus, so dass vom Pausenmodus zurück in den Kochmodus gewechselt wird,
- Erfassen mindestens einer Messgröße, um eine Änderung des Speisenzubereitungsvorgangs und/oder der Speise infolge des Wechsels von dem Kochmodus in den Pausenmodus und zurück in den Kochmodus zu ermitteln.

Die Vorteile, Ausführungsformen und Definitionen des vorhergehend beschriebenen Aspekts der Erfindung können entsprechend auf das vorliegende Verfahren, das vorzugsweise mithilfe der Steuerungseinheit computerimplementiert ist, übertragen werden.

Ein weiterer Aspekt der Erfindung betrifft ein Computerprogrammprodukt. Das Computerprogrammprodukt umfasst Befehle, die bei der Ausführung des Programms (Computerprogrammprodukts) durch eine bzw. die Steuerungseinrichtung diese veranlassen, das Verfahren oder die Schritte des Verfahrens gemäß dem vorhergehenden Aspekt durchzuführen.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung einer erfindungsgemäßen Küchenmaschine mit einem Teilschnitt durch das Speisenzubereitungsgefäß;
- Figur 2:: Schematische Darstellung eines zeitlichen Ablaufs für eine Speisenzubereitung mit einem Wechseln vom Kochmodus in den Pausenmodus und zurück.

- Figur 3: Schematische Darstellung der Steuerung der Funktionskomponente anhand eines digitalen Rezeptes im Kochmodus.
- Figur 4: Schematische Darstellung der Ermittlung durch die Steuerungseinrichtung, ob der Speisenzubereitungsvorgang nach Reaktivierung des Kochmodus im Anschluss an einen Pausenmodus anzupassen ist oder unverändert fortzusetzen ist.
- Figur 5: Schematische Darstellung der Steuerung der Funktionskomponente nach Reaktivierung des Kochmodus unter Anpassung des Speisenzubereitungsvorgangs.

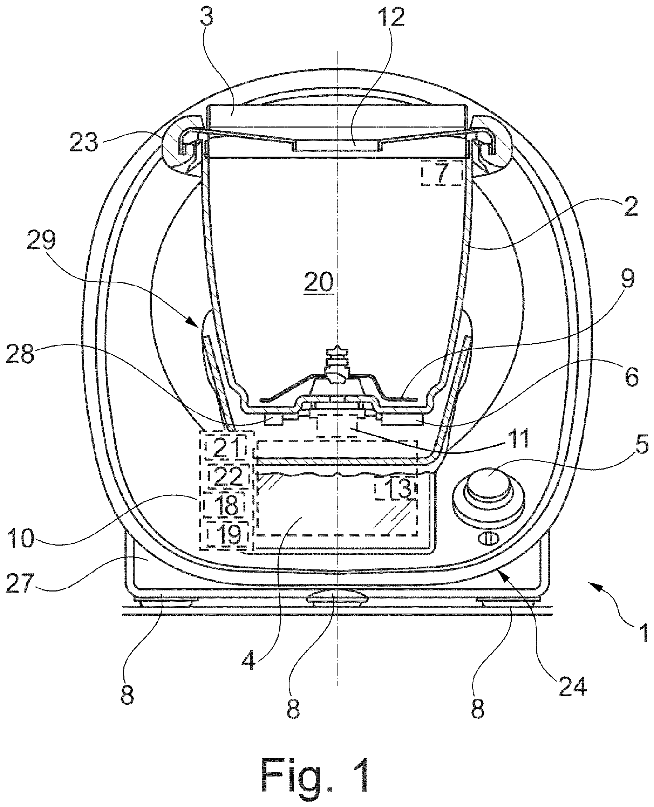

Die Figur 1 zeigt eine Küchenmaschine 1 zum Durchführen eines Speisenzubereitungsvorgangs in einem Speisenzubereitungsgefäß 2. Ein Heizelement 6 kann zum Erhitzen der Speise 20 insbesondere im Bodenbereich des Speisenzubereitungsgefäßes 2 vorhanden sein. Für ein Dampfgaren erhitzt insbesondere das Heizelement Wasser insbesondere in dem Speisenzubereitungsgefäß 2, so dass eine über dem Wasser positionierte Speise durch Wasserdampf des erhitzten Wassers erhitzt und dampfgegart wird. Zum Zerkleinern und/oder Mischen der Speise 20 kann ein drehbares Werkzeug 9 eingesetzt sein, das über eine nicht gezeigte Welle insbesondere durch eine Öffnung im Boden des Speisenzubereitungsgefäßes 2 mit einem Antrieb 11 der Küchenmaschine 1 gekoppelt ist. Ein Gehäuse 27 der Küchenmaschine 1 umschließt den Antrieb 11 und stellt eine Aufnahme 29 für das Speisenzubereitungsgefäß 2 bereit. Insbesondere ist eine nicht dargestellte Gefäß-Verriegelung zum Verriegeln oder Entriegeln des Speisenzubereitungsgefäßes 2 in der Aufnahme 29 und/oder ein Sensor zum Erfassen des Gefäß-Verriegelungszustand (verriegelt oder entriegelt) vorgesehen. Die Küchenmaschine 1 hat seine Steuerungseinrichtung 10 zum Ansteuern der Funktionskomponente wie Heizelement 6 oder Werkzeug 9 bzw. Antrieb 11. Mindestens ein Messsensor zum Erfassen eines Ist-Zustands, insbesondere ein Temperatursensor 28 zum Erfassen eines Messwertes für die Ermittlung einer Speisentemperatur einer sich in dem Speisenzubereitungsgefäß befindlichen Speise 20, ist vorhanden. Bevorzugt ist der Temperatursensor 28 an einer Unterseite des Speisenzubereitungsgefäßes 2 angeordnet und/oder Speisenzubereitungsgefäß 2 integriert. im Insbesondere weist die Küchenmaschine 1 einen weiteren Zustandssensor 18 zum Erfassen einer Zustandsinformation der Küchenmaschine 1 oder der Speise 20 auf, beispielsweise zum Erfassen einer Motorlast des Antriebs 11. Insbesondere ist mindestens ein Gewichtssensor 8 in einem Standfuß, mit dem das Gehäuse auf einem Untergrund steht, vorgesehen. Vorzugsweise sind mindestens zwei oder drei Standfüße jeweils mit einem Gewichtssensor 8 ausgestattet, z.B. um es auf Basis der Messdaten der Gewichtssensoren 8 der Steuerungseinrichtung 10 zu ermöglichen, eine Unwucht zu ermitteln. Bevorzugt umfasst die Küchenmaschine 1 eine Kommunikationsschnittstelle 19, insbesondere für WLAN (Wireless Local Area Network) und/oder Bluetooth. Die Steuerungseinrichtung 10 umfasst einen Prozessor 21 und einen Speicher 22.

Ein Deckel 3 kann zum Schließen des Speisenzubereitungsgefäßes 2 vorgesehen sein. Der Deckel 3 kann eine Deckelöffnung 12 enthalten, um Zutaten in das durch den Deckel 3 überwiegend durch den Deckel 3 abgedeckte Speisenzubereitungsgefäßes 2 zu geben. Eine Verriegelungseinrichtung 23 kann vorgesehen sein, um den Deckel 3 beispielsweise mit einer Walze oder einem verschiebbaren Riegel im geschlossenen Zustand zu verriegeln oder das Speisenzubereitungsgefäß 2 in der Aufnahme 29 zu verriegeln. Der Einsatz einer anders funktionierenden Verriegelungseinrichtung 23 ist ebenso möglich. Dabei kann zwischen einem verriegelten und entriegelten Zustand gewechselt werden, vorzugsweise mithilfe eines nicht gezeigten Motors der Verriegelungseinrichtung 23. Der Deckel-Verriegelungszustand (verriegelte oder entriegelte) und/oder der Deckel-Auflagezustand (Deckel liegt auf oder nicht). In einer Ausgestaltung wird der Deckel-Auflagezustand durch einen Deckelsensor 7 (bevorzugt mit einem dedizierten Deckelsensor am Grundgerät oder alternativ mit einem HALL-Sensoren im Topf, die mit Magneten im Deckel 3 wechselwirken) detektiert und/oder mithilfe mindestens eines Gewichtssensors 8 in einem Standfuß.

Über eine Benutzerschnittstelle 24 kann der Benutzer Spracheingaben tätigen und/oder Sprachnachrichten erhalten. Über die Benutzerschnittstelle 24 kann insbesondere über ein Touchscreen-Display 4 ein Bildzeichen 13 mit Knopffunktion auf dem Touchscreen-Display 4 und/oder einen mechanischen Knopf 5 angezeigt werden. Der Benutzer kann auf diese Weise akustisch und/oder optisch Informationen und Anweisungen von der Steuerungseinrichtung 10 erhalten und Eingaben für die Steuerungseinrichtung 10 tätigen. Vorzugsweise hat die Steuerungseinrichtung 10 Zugriff auf mindestens ein digitales Rezept mit mehrere Rezeptschritten, die mithilfe der Benutzerschnittstelle 24 den Benutzer Schritt für Schritt anleiten, um die Rezeptschritte überwiegend unter mithilfe von Funktionskomponenten der Küchenmaschine 1 zum Erhitzen, Dampfgaren, Zerkleinern und/oder Mischen abzuarbeiten und auf diese Weise eine Speise 20 zuzubereiten.

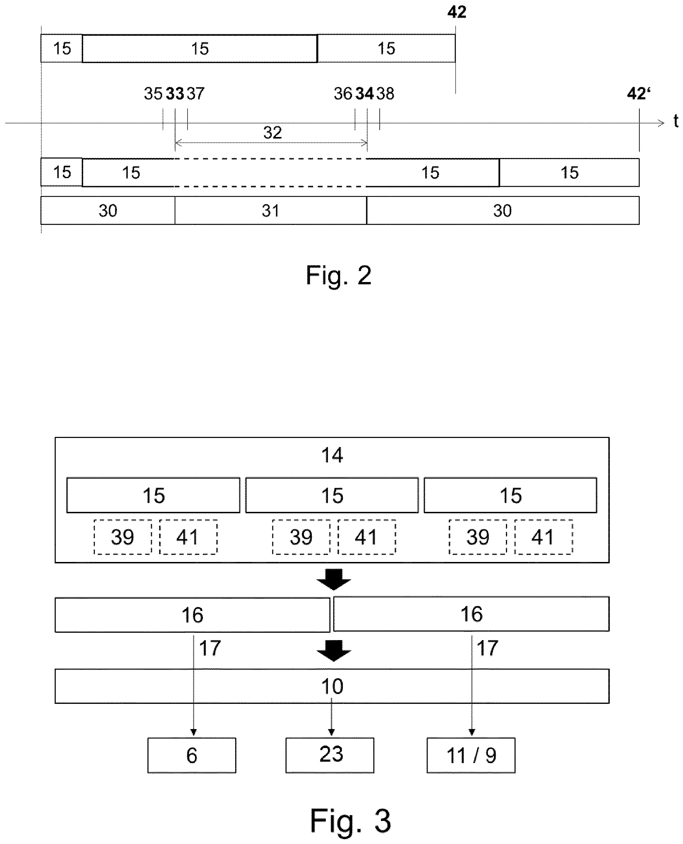

Insbesondere in allen hierin beschriebenen, exemplarischen Ausgestaltungen, die insbesondere auch in den Figuren 1 bis 5 gezeigt sind, steuert die Steuerungseinrichtung 10 die Funktionskomponenten der Küchenmaschine 1 unter anderem auf Basis von Rezeptschritten 15 und/oder Kochparametern 16 (vgl. beispielsweise Figuren 3 bis 5). Ein Kochparameter 16 kann z.B. eine Soll-Temperatur für das Heizelement 6 und/oder eine Dauer für ein Erhitzen sein. Ein Kochparameter 16 kann z.B. alternativ oder ergänzend eine Drehzahl des Werkzeugs 9 und/oder eine Dauer für ein Mischen und/oder Zerkleinern sein. In einer Ausgestaltung legt ein digitales Rezept 14 oder ein Rezeptschritt 15 einen Wert 17 für einen anzuwendenden Kochparameter 16 zum Steuern einer Funktionskomponente fest. In einer Ausgestaltung ist ein Kochparameter 16 der Soll-Zustand der Deckel-Verriegelung für eine Verriegelungseinrichtung 23 und/oder Gefäß-Verriegelung für eine Verriegelungseinrichtung der Aufnahme 29 für das Speisenzubereitungsgefäß 2.

Die Steuerungseinrichtung 10 sorgt dafür, dass in einem Kochmodus 30 eine Speise 20 in dem Speisenzubereitungsgefäß 2 in gewünschter Weise erhitzt, zerkleinert und/oder gemischt wird.

Die Steuerungseinrichtung 10 ist so konfiguriert, dass mindestens eine Messgröße erfasst wird, um eine Änderung des Speisenzubereitungsvorgangs und/oder der Speise 20 infolge eines Wechsels von dem Kochmodus 10 in den Pausenmodus 31 und zurück in den Kochmodus 10 zu ermitteln, worauf im Folgenden exemplarisch anhand von Beispielen näher eingegangen wird.

Die Figur 2 zeigt einen exemplarischen, zeitlichen Ablauf für die Zubereitung einer Speise 20 mit einem Wechseln vom Kochmodus 30 in den Pausenmodus 31 und zurück über die Zeitachse t. Mehrere Rezeptschritte 15 eines digitalen Rezeptes 14 sind zu Beginn des Speisenzubereitungsvorgangs mit einer zeitlich nacheinander vorgesehenen Reihenfolge geplant, die rechnerisch eine planmäßige Dauer, Zubereitungszeit oder Zubereitungszeitpunkt 42 der Fertigstellung der Speise 20 gemäß dem digitalen Rezept 14 ergibt und/oder über die Benutzerschnittstelle als dem Benutzer angezeigt werden kann, beispielsweise zu Beginn und/oder mithilfe einer Anzeige einer bis zur Speisenfertigstellung verbleibenden Restzeit. In einer Ausgestaltung kann angezeigt und/oder berücksichtigt sein, dass manuelle Schritte des Benutzers beispielsweise zum Hinzufügen einer Zutat vor einem Bearbeitungsschritt für die Zutat mithilfe der Küchenmaschine einer gewissen Variabilität in Abhängigkeit von der Schnelligkeit des Benutzers unterliegen.

In der Figur 2 ist der planmäßige Ablauf oberhalb der Zeitachse t angezeigt, bei dem alle Rezeptschritte 15 im Kochmodus durchgeführt werden und die Speise 20 zum Zubereitungszeitpunkt 42 fertig zubereitet ist.

Im Vergleich dazu ist unterhalb der Zeitachse t der Ablauf gezeigt, wenn während des zweiten Rezeptschrittes 15, der wie auch der erste Rezeptschritt 15 im Kochmodus 30 durchgeführt wurde, der Pausenmodus 31 aktiviert und dadurch in den Pausenmodus 31 gewechselt wurde. Mit gestrichelten Linien ist die Pausendauer 32 illustriert, um die sich der zweite Rezeptschritt 15 verlängert, wenn nach dem Wechsel zurück in den Kochmodus 30 der Speisenzubereitungsvorgang unverändert fortgeführt wird. Die dann vorliegende Dauer, Zubereitungszeit oder Zubereitungszeitpunkt 42` der Fertigstellung der Speise 20 entspricht (kalkulatorisch oder ungefähr) der Summe der planmäßigen Dauer, Zubereitungszeit oder Zubereitungszeitpunkt 42 zuzüglich der Pausendauer 32. Die Pausendauer 32 entspricht bevorzugt der Zeit zwischen dem Zeitpunkt 33 der Aktivierung des Pausenmodus 31 und dem Zeitpunkt 24 der Reaktivierung des Kochmodus 30.

Die mindestens eine Messgröße, die von der Steuerungseinrichtung 10 erfasst wird, um eine Änderung des Speisenzubereitungsvorgangs und/oder der Speise 20 infolge eines Wechsels von dem Kochmodus 30 in den Pausenmodus 31 und zurück in den Kochmodus 30 zu ermitteln, kann in einer Ausgestaltung zu einem Zeitpunkt 35 vor dem Zeitpunkt 33 der Aktivierung des Pausenmodus 31, zu einem Zeitpunkt 37 nach dem Zeitpunkt 33 der Aktivierung des Pausenmodus 31, exakt zu dem Zeitpunkt 33 der Aktivierung des Pausenmodus 31, zu einem Zeitpunkt 36 vor dem Zeitpunkt 34 der Reaktivierung des Kochmodus 30, zu einem Zeitpunkt 38 nach dem Zeitpunkt 34 der Reaktivierung des Kochmodus 30 und/oder exakt zu dem Zeitpunkt 34 Reaktivierung des Kochmodus 30 während des Pausenmodus 31 gemessen, erfasst oder ermittelt werden. Die Zeitpunkte 35, 36, 37, und/oder 38 fallen dabei in einen begrenzten Zeitbereich relativ zu dem Zeitpunkt 33 der Aktivierung des Pausenmodus 31 bzw. des Zeitpunkts 34 der Reaktivierung des Kochmodus 30.

In einer Ausgestaltung ist die mindestens eine Messgröße die Speisentemperatur. Alternativ oder ergänzend kann die Messgröße die Drehzahl des Werkzeugs, eine Motorlast, ein Gewichtssensorsignal, ein auf Basis des Gewichtssensorsignals ermitteltes Gewicht der Speise, eines Lebensmittels oder einer Zutat, ein Druck innerhalb des Speisenzubereitungsgefäßes, ein Deckel-Auflagezustand, ein Deckel-Verriegelungszustand und/oder ein Gefäß-Verriegelungszustand sein. Es ist möglich, dass eine Messgröße vorgesehen ist, die von der Steuerungseinrichtung 10 anhand von Messdaten von mehreren Messgrößen ermittelt wird.

Die oben beschriebenen Zeitpunkt 33 bis 38 für Ausgestaltungen zum Erfassen der mindestens einen Messgröße stellen den einen oder die mehreren Zeitpunkte dar, an denen die Messgröße oder die Messgrößen jeweils gemessen, erfasst oder ermittelt werden, und die Steuerungseinrichtung 10 daraus eine Änderung des Speisenzubereitungsvorgangs und/oder der Speise 20 infolge des Wechsels von dem Kochmodus 30 in den Pausenmodus 31 und zurück in den Kochmodus 30 ermittelt.

Die Aktivierung des Pausenmodus 31 kann durch ein Detektieren des Abhebens des Deckels 3 erfolgen. Die Reaktivierung des Kochmodus 30 kann durch ein Detektieren des Schließens des Deckels 3 erfolgen. Alternativ oder ergänzend ist ein Aktivieren des Pausenmodus 31 und/oder ein Reaktivieren des Kochmodus 30 mithilfe der Benutzerschnittstelle 24 möglich, insbesondere mithilfe eines Knopfes 5, über das Drücken eines Bildzeichens 13 auf dem Touchscreen-Display 4 oder mittels einer Spracheingabe an der Küchenmaschine oder remote via einem mobilen Benutzergerät oder SmartSpeakers. Zum Beispiel ist ein mobiles Benutzergerät ein Smartphone.

Die Figur 3 zeigt schematisch die Steuerung der Funktionskomponente anhand eines digitalen Rezeptes 14 im Kochmodus 30. Das digitale Rezept 14 enthält mehrere Rezeptschritt 15. In einer Ausgestaltung hat das digitale Rezepte 14 und/oder ein oder mehrere Rezeptschritte 15 eine Anpassungsprüfungsinformation 39 und/oder eine Anpassungsinformation 41. Insbesondere ist die Steuerungseinrichtung 10 so eingerichtet ist, dass im Falle einer Aktivierung des Pausenmodus 31 die Anpassungsprüfungsinformation 39 zur Ermittlung des Vorliegens oder Nicht-Vorliegens eines Anpassungsbedarfes des Speisenzubereitungsvorgangs berücksichtigt wird und/oder die Anpassungsinformation 41 bei einer Ermittlung einer benötigten Anpassung des Speisenzubereitungsvorgangs berücksichtigt wird. Zwei unterschiedliche Kochparameter 16 können wie dargestellt mit entsprechenden Werten 17 durch die Rezeptschritte 15 festgelegt sein, die von der Steuerungseinrichtung 10 zum Steuern der entsprechenden Funktionskomponenten (einschließlich der Verriegelungseinrichtung 23) genutzt werden. Insbesondere ist der erste Kochparameter 16 die Soll-Temperatur für das Heizelement 6 und der zweite Kochparameter 16 die Drehzahl, mit dem das Werkzeugs 9 durch den Antrieb 11 gedreht werden soll. Ein erster Wert 17 für den ersten Kochparameter 16 und einen zweiter Wert 17 für den zweiten Kochparameter 16 werden durch den ersten und/oder zweiten jeweils Rezeptschritt festgelegt. Beispielsweise bezieht sich die Figur 3 auf die Durchführung des ersten Rezeptschrittes 15 der Figur 2 oder die Durchführung des zweiten Rezeptschrittes 15 der Fig. 2 bis zum Zeitpunkt der Aktivierung des Pausenmodus 31.

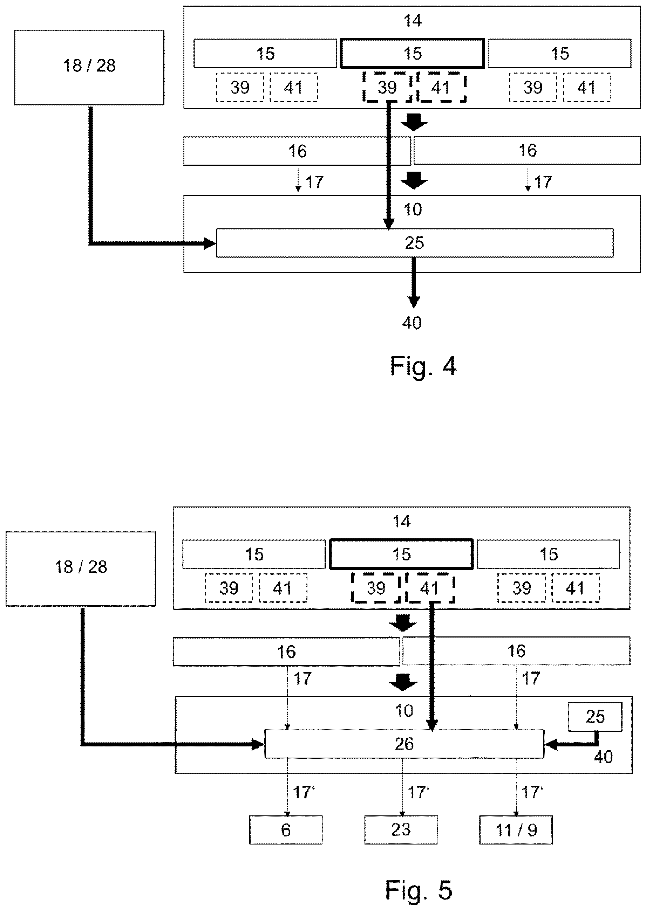

Die Figur 4 zeigt schematisch die Ermittlung eines Ergebnisses 40 (durch die Steuerungseinrichtung 10) nach einer Reaktivierung des Kochmodus im Anschluss an einen Pausenmodus. Das Ergebnis kann insbesondere die möglichen Resultate beinhalten, dass der Speisenzubereitungsvorgang im Anschluss an den Pausenmodus anzupassen ist oder im Anschluss an den Pausenmodus unverändert fortzusetzen ist.

Insbesondere wird die Ermittlung des Ergebnisses 40 von der Anpassungsprüfungseinheit 25 der Steuerungseinrichtung 10 durchgeführt, die hierzu bevorzugt eine Anpassungsprüfungsinformation 39 des aktuellen Rezeptschrittes 15 oder des digitalen Rezeptes 14, Werte 17 von Kochparametern 15 gemäß dem aktuellen Rezeptschritt 15 und/oder Messdaten eines Zustandssensors 18 und/oder des Temperatursensors 28 berücksichtigt.

Die Figur 5 zeigt schematisch, wie bei einem Anpassungsbedarf der Speisenzubereitungsvorgang angepasst und hierzu die Steuerung der Funktionskomponente zur entsprechenden Umsetzung der Anpassung des Speisenzubereitungsvorgangs nach einer Reaktivierung des Kochmodus 30 im Anschluss an einen Pausenmodus 31 durchgeführt wird. Insbesondere erfolgen die in Fig. 5 gezeigten Vorgänge auf Basis des Ergebnisses 40 und/oder wenn das Ergebnis 40 vorzugsweise gemäß der in Fig. 4 gezeigten Ermittlung das Resultat beinhalten, dass der Speisenzubereitungsvorgangs nach einer Reaktivierung des Kochmodus 30 im Anschluss an den Pausenmodus 31 anzupassen ist. Insbesondere führt die Steuerungseinrichtung 10 die Ermittlungen und Prozesse, die in den Figuren 4 und 5 schematisch illustriert sind, durch.

Für die Anpassung ermittelt die Anpassungsermittlungseinheit 26 (der Steuerungseinrichtung 10) geänderte Werte 17' für die angepasste Steuerung der Funktionskomponente wie z.B. das Heizelement 6, die Verriegelungseinrichtung 23 und/oder den Antrieb 11 zum Drehen des Werkzeugs 9 für ein Mischen und/oder Zerkleinern, und/oder die Dauer des Erhitzens oder Drehens des Werkzeugs. Bevorzugt erfolgt die Ermittlung der geänderten Werte 17' für die Kochparameter 16 durch die Anpassungsermittlungseinheit 26 unter Berücksichtigung einer Anpassungsinformation 41 des aktuellen Rezeptschrittes 15 oder des digitalen Rezeptes 14, anhand der Werte 17 von Kochparametern 16 gemäß dem aktuellen Rezeptschritt 15 und/oder Messdaten eines Zustandssensors 18 und/oder des Temperatursensors 28.

In einer Ausführungsform wird ein Verfahren vorgeschlagen, bei dem der Benutzer aktiv den Kochvorgang pausieren kann. Dies kann - um in den Pausenmodus 31 zu wechseln - über die Benutzerschnittstelle 24 erfolgen und/oder durch Anheben des Deckels 3, wenn der Deckel 3 - ohne verriegelt zu sein - auf dem Speisenzubereitungsgefäße aufliegt. Bei der Wiederaufnahme des Kochvorganges nach der Reaktivierung des Kochmodus würde anhand der Pausenzeit und weiteren Aspekten der fortgesetzte Kochvorgang angepasst werden. Der Fortführungswunsch würde über die Benutzerschnittstelle - insbesondere über Sprachsteuerung an der Küchenmaschine 1 oder remote via ein mobiles Benutzergerät - oder über das Auflegen des Deckels erkannt und danach gemäß einem Prüfungsergebnis angepasst fortgeführt werden. Ein aktives Pausieren des Kochvorganges durch den Benutzer und Wiederaufnahme des Kochvorganges wird ermöglicht, wobei in Abhängigkeit einer Prüfung einer Änderung der Speise 20 aufgrund des Pausierens auf Basis mindestens einer Messgröße und bevorzugt unter Berücksichtigung der Pausendauer der Kochvorgang angepasst fortgeführt wird.

Nachfolgend wird ein erstes exemplarisches Umsetzungsbeispiel zur Veranschaulichung der Erfindung kurz beschrieben, zunächst für den Fall einer Speisenzubereitung ohne einen Wechsel in den Pausenmodus 31 und anschließend zum Vergleich für den Fall mit einem Wechseln in den Pausenmodus 31 und zurück in den Kochmodus 30. Die Schritte beinhalten relevante Auszüge aus Rezeptschritten 15:
Beispiel "Pasta kochen ohne Wechsel in den Pausenmodus":
   - Schritt 1: Der Benutzer wird über die Benutzerschnittstelle 24 aufgefordert, 1,2 Liter Wasser und 500g Pasta in das Speisenzubereitungsgefäß 2 hinzuzufügen.
(Insbesondere wird mithilfe von Gewichtssensoren 8 während des Hinzufügens die aktuelle Menge angezeigt wird.)
   - Schritt 2: Der Benutzer bestätigt die über die Benutzerschnittstelle 24 angezeigte Dauer (z.B. 10 Minuten bzw. 600 Sekunden), Soll-Temperatur, Drehzahl und/oder Drehrichtung. (Ein solches Bestätigen kann ein Knopfdruck oder ein Drehen bzw.
Einstellen der vorgeschlagenen Dauer beinhalten.)
   - Schritt 3: Die Pasta wird mit aufgelegtem Deckel 3 entsprechend bei 98 °C gekocht und das Werkzeug 9 führt eine Rotation im Linkslauf bzw. mit der Stupfen Werkzeugkante voran aus.
   - Schritt 4: Der Kochvorgang ist nach Ablauf der eingestellten Dauer beendet und die Pasta kann serviert werden.

Beispiel "Pasta kochen mit Wechsel in den Pausenmodus und zurück in den Kochmodus und anschließendem Anpassen des Speisenzubereitungsvorgangs":
- Schritt 1 bis 3: wie Schritte 1 bis 3 im Beispiel "Pasta kochen ohne Wechsel in den Pausenmodus".
- Ereignis 1: der Benutzer nimmt während Schritt 3 etwa 180 Sekunden vor Ablauf des Endes der eingestellten Dauer (600 Sekunden) für das Erhitzen bzw. die Speisenbearbeitung des Schrittes 3 den nicht-verriegelten Deckel 3 ab, um den Pausenmodus zu aktivieren und eine Pause einzulegen. Die Steuerung reduziert die Drehzahl des Werkzeugs 9 auf Null und stoppt eine angezeigte Zeit, welche dem Benutzer die Zeit seit dem Starten des Schrittes 3 anzeigt. Im Hintergrund findet (weiterhin) eine kontinuierliche Temperaturüberwachung mithilfe des Temperatursensors 28 statt.
- Ereignis 2: Der Benutzer legt den Deckel 3 nach 30 Sekunden wieder auf. Die Detektion des Deckels 3 aktiviert die Reaktivierung des Kochmodus 30, die Erfassung der mindestens einen Messgröße und darauf basierend, insbesondere unter Berücksichtigung der Pausendauer 32, ob der Kochprozess in angepasster Weise fortgesetzt werden soll. Insbesondere wird hierzu (als Messgröße) die Speisentemperatur zur Ermittlung einer Zeitspanne verarbeitet, in der die Speise 20 während des Pausenmodus 31 eine Speisentemperatur von über 98 °C hatte, z.B. 20 Sekunden. (Mit anderen Worten fiel die Temperatur in dem genannten Beispielwert für die letzten 10 Sekunden im Pausenmodus 31 auf 98°C oder weniger.) Während der beispielhaft genannten 20 Sekunden lag eine hinreichende Erhitzung vor, die gemäß der Informationen des digitalen Rezeptes 14 das Kochergebnis nicht als beeinträchtigend gewertet werden. Daher wird von der Pausendauer (30 Sekunden) diese Zeitspanne (10 Sekunden) abgezogen und das Resultat dieser Substruktion mit einem Schwellwert (z.B. 5 Sekunden) verglichen. Weil in diesem Beispiel der Schwellwert (insbesondere als Anpassungsprüfungsinformation 39) überschritten wurde, wird als Ergebnis 40 ein Anpassen des Speisenzubereitungsvorgangs ermittelt (insbesondere von der Anpassungsprüfungseinheit 25). Die Steuerungseinrichtung 10, insbesondere die Anpassungsermittlungseinheit 26, passt daher gemäß einer Anpassungsinformation 41 die Dauer (als Kochparameter 16) für den aktuellen Rezeptschritt 15 und Erhitzungsvorgang so an, dass für das Fortsetzen des aktuellen Rezeptschrittes 15 nach dem Wechsel zurück in den Kochmodus 30 das Erhitzen um die oben erwähnte Zeitspanne (10 Sekunden) später beendet wird. Beispielsweise beginnt eine auf dem Touchscreen-Display 4 angezeigte Uhr, die während des Pausenmodus 31 bei 420 Sekunden stillstand, mit dem Wechsel zurück in den Kochmodus 30 bei 430 Sekunden weiterzulaufen. Bevorzugt wird die Restzeit angezeigt, welche die Anpassung des Speisenzubereitungsvorgangs berücksichtigt, also gewissenmaßen eine angepasst Restzeit.

In einer Ausgestaltung wird als eine zusätzliche Messgröße eine Durchmischung ermittelt, die ein Maß für eine Temperaturschwankung während eines Mischens (mit max. 200 U/min) darstellt, vorzugsweise unmittelbar nach dem Reaktivieren des Kochmodus 30. Bevorzugt wird bei einem Pausenmodus 31 während eines Rezeptschritt 15 mit einem Erhitzungsvorgang durch den Wechsel zurück in den Kochmodus 30 ein zusätzliches Mischen durch das Werkzeug 9 getriggert, um die Durchmischung ermitteln zu können, falls sich das Werkzeug 9 andernfalls nicht drehen würde (und folglich die Messgröße der Durchmischung nicht ermittelt werden könnte). Falls die Speisentemperatur bei Unterschreiten einer Schwelle für eine homogene Durchmischung unter einen Temperaturschwellwert (z.B. 98°C oder niedriger) fällt, ist insbesondere als eine weitere Anpassungsmaßnahme vorgesehen, dass die Zeitspanne zwischen dem Wechsel zurück in den Kochmodus 30 und dem Zeitpunkt des Überschreitens eines Schwellwertes oder dem Temperaturschwellwert (z.B. > 98°C) der Dauer des aktuellen Rezeptschritts bzw. der Dauer des Erhitzungsprozess hinzuaddiert wird. Eine Beeinträchtigung des Kochergebnisses kann so reduziert werden. Die Zeit des erneuten Aufheizens bis zum Erreichen einer erforderlichen Zieltemperatur kann so durch die weitere Anpassungsmaßnahme weitestgehend kompensiert werden. In einer Ausgestaltung kann alternativ oder ergänzend zur Speisetemperatur kann analog eine zeitliche Anpassung auch auf Basis des Dampfgehalt in Bezug auf einen Wasserdampf-Garvorgang angewendet werden.

Nachfolgend wird ein zweites exemplarisches Umsetzungsbeispiel zur Veranschaulichung der Erfindung kurz beschrieben.

Der aktuelle Rezeptschritt 15 beinhaltet ein Zerkleinern von Gemüse ohne ein Erhitzen. Nach einem Aktivieren des Pausenmodus 31 steht das Werkzeug 9 während der Pausendauer 32 still. Nach Reaktivierung des Kochmodus 30 ermittelt die Anpassungsprüfungseinheit 25 anhand einer Anpassungsprüfungsinformation 39, dass der Speisenzubereitungsvorgang nach dem Wechsel zurück in den Kochmodus 30 unverändert fortzusetzen ist. Die Dauer, Zubereitungszeit oder der Zubereitungszeitpunkt 42` der Fertigstellung der Speise 20 entspricht somit ungefähr der Summe der planmäßigen Dauer, Zubereitungszeit oder Zubereitungszeitpunkt 42 zuzüglich der Pausendauer 32. Insbesondere läuft eine angezeigte Uhr, die während des Pausenmodus 31 stillstand, mit dem Wechsel zurück in den Kochmodus 30 einfach weiter.

In einer Ausgestaltung wird für die Anpassung der Kochparameter nach der Reaktivierung des Kochmodus 30 nach einem Pausenmodus 31 ein Gewicht und/oder Volumen einer Speise, eine Art der Speise und/oder ein aktuelles Zeitintervall zum Zeitpunkt der Aktivierung des Pausenmodus 31 während der Dauer der Bearbeitung berücksichtigt. Beispielsweise hält eine dickflüssige Kartoffelsuppe und/oder eine stärkehaltige Flüssigspeise eine erhitzte Temperatur länger als Wasser, so dass eine geringere Temperaturdifferenz während eines Pausenmodus entstehen kann, in dem das Erhitzen ausgesetzt wird.

In einer Ausgestaltung wird ein Temperaturunterschied (vor und nach dem Pausenmodus 31) und/oder ein Temperaturschwellwert-Vergleich (insbesondere Rezeptschritt-spezifisch) für das Ergebnis 40 und/oder ein Ermitteln der Anpassungsmaßnahmen herangezogen.

In einer bevorzugten Ausgestaltung werden während des Pausenmodus 31 und/oder unmittelbar im Anschluss an den Wechsel zurück in den Kochmodus 30 eine oder mehrere Zeitspannen identifiziert und für die Ermittlung des Ergebnisses 40 und/oder Anpassungsmaßnahmen genutzt, in denen trotz der Reduzierung von Bearbeitungsprozessen (Erhitzen, Dampfgaren, Mischen und/oder Zerkleinern) dennoch ein Fortschritt in Richtung des von dem aktuellen Rezeptschritt 15 angestrebten Bearbeitungsziel erreicht wurde. Insbesondere wird in diesem Fall eine solche Zeitspanne bei einer Änderung der restlichen Dauer des aktuellen Rezeptschrittes berücksichtigt (bevorzugt abgezogen, wenn die Pausendauer zuvor hinzuaddiert wurde).

Insbesondere wird das Volumen und/oder Gewicht der Speise berücksichtigt, derart, dass unter denselben Voraussetzungen (Zutatenanteile, Kochtemperatur, etc.) ein geringeres Volumen oder Gewicht einer Flüssigspeise schneller abkühlt als ein höheres Volumen oder Gewicht einer Flüssigspeise.

Nachfolgend wird ein drittes exemplarisches Umsetzungsbeispiel kurz beschrieben, bei dem der Benutzer einen Zielparameter mit einer Variante "schnellstmögliche Speisenzubereitung" über die Benutzerschnittstelle 24 festgelegt hat. Eine Flüssigspeise wie eine Suppe wird im ersten Schritt 20 min und im zweiten Schritt nochmals 15 min mit Gemüseeinlage gekocht. Im ersten Kochschritt aktiviert der Benutzer den Pausenmodus 5 min vor Beenden des Kochprozesses, also nach 15 min anstelle von 20 min. Die Pausendauer 32 beträgt 5 min. Nach dem anschließenden Wechsel zurück in den Kochmodus 30 wird der Kochvorgang fortgesetzt und eine Dauer des Erhitzungsvorgangs des aktuellen Rezeptschrittes 15 so angepasst, als hätte es keine Pausendauer 32 gegeben (oder alternativ nur für eine verglichen mit der Pausendauer 32 kürzeren Zeit zusätzlich erhitzt), so dass die Speise trotz des Pausenmodus 31 zum planmäßigen Fertigstellungszeitpunkt (oder nur kurze Zeit später) fertiggestellt wird und/oder der nachfolgende Rezeptschritt 15 begonnen wird. Es handelt sich folglich um eine Beschleunigung und schnellstmögliche Speisenzubereitung, weil die Pausendauer 32 im Pausenmodus 31, während der das Heizelement 6 nicht mit Energie für ein Erhitzen versorgt wurde, nicht (oder nicht im vollen Umfang) nach dem Wechsel zurück in den Kochmodus 30 nachgeholt wurde. Dies ist möglich, weil die Steuerungseinrichtung 10 anhand von Informationen des digitalen Rezepts 14 (z.B. kein Temperaturverlauf-sensibles Lebensmittel), des Rezeptschrittes 15 (Zeitintervall des Zeitpunkts der Aktivierung des Pausenmodus, insbesondere im letzten Drittel der Dauer des Rezeptschrittes) ermittelt hat, dass eine Beschleunigung in dieser Weise dennoch das Kochergebnis nicht negativ beeinflussen wird. Als Bonuseffekt konnte in diesem Beispiel der Benutzer zugleich Energie einsparen und den Stromverbrauch reduzieren.

## Patentansprüche

1. Küchenmaschine (1) zum Durchführen eines Speisenzubereitungsvorgangs durch Erhitzen, Dampfgaren, Zerkleinern und/oder Mischen einer Speise (20) in einem Speisenzubereitungsgefäß (2), wobei die Küchenmaschine (1) eine Steuerungseinrichtung (10) umfasst, die so eingerichtet ist, dass die Steuerungseinrichtung (10) auf Basis von einem oder mehreren Kochparametern (16) dafür sorgt, dass eine Speise (20) in dem Speisenzubereitungsgefäß (2) durch ein Heizelement (6) erhitzt und/oder durch ein drehbares Werkzeug (9) zum Mischen oder Zerkleinern bearbeitet wird,
wobei die Steuerungseinrichtung (10) auf ein digitales Rezept (14) mit mehreren Rezeptschritten (15) zugreifen kann, das für mindestens einen Rezeptschritt (15) der mehreren Rezeptschritte (15) einen Wert (17) für den Kochparameter (16) oder Werte (17) für die Kochparameter (16) enthält,
wobei ein Kochmodus (30) vorgesehen ist und die Küchenmaschine (1) so eingerichtet ist, dass in dem Kochmodus (30) der eine oder die mehreren Kochparameter (16) gemäß dem digitalen Rezept (14) festgelegt werden, um eine Speise (20) gemäß dem digitalen Rezept (14) wenigstens teilautomatisiert zuzubereiten,
wobei ein Pausenmodus (31) vorgesehen ist und die Küchenmaschine (1) so eingerichtet ist, dass in dem Pausenmodus (31) eine dem Heizelement (6) zugeführte Energie, eine Drehzahl des Werkzeugs (9) und/oder ein Drehmoment des Werkzeugs (9) in Abhängigkeit von einem Überwachungsergebnis reduziert werden können, so dass es im Falle einer solchen Reduzierung zu einer Abweichung bei mindestens einem Kochparameter (16) verglichen mit dem vom digitalen Rezept (14) festgelegten Wert (17) kommt,
wobei eine Aktivierung des Pausenmodus (31) während des Kochmodus (30) dazu führt, dass vom Kochmodus (30) in den Pausenmodus (31) gewechselt wird,
wobei eine anschließende Reaktivierung des Kochmodus (30) während des Pausenmodus (31) dazu führt, dass vom Pausenmodus (31) zurück in den Kochmodus (30) gewechselt wird,
**dadurch gekennzeichnet, dass**
die Steuerungseinrichtung (10) so konfiguriert ist, dass mindestens eine Messgröße erfasst wird, um eine Änderung des Speisenzubereitungsvorgangs und/oder der Speise (20) infolge eines Wechsels von dem Kochmodus (30) in den Pausenmodus (31) und zurück in den Kochmodus (30) zu ermitteln.

2. Küchenmaschine (1) nach Anspruch 1, **dadurch gekennzeichnet, dass** die mindestens eine Messgröße eine Speisentemperatur ist oder umfasst.

3. Küchenmaschine (1) nach einem der vorhergehenden Ansprüche, **dadurch gekennzeichnet, dass** die mindestens eine Messgröße ein Gewichtsignal mindestens eines Gewichtssensors (8) und/oder ein Motorlastsignal eines Antriebs (11) für das Werkzeug (9) ist oder umfasst.

4. Küchenmaschine (1) nach einem der vorhergehenden Ansprüche, **dadurch gekennzeichnet, dass** die mindestens eine Messgröße eine Pausendauer (32) ist oder umfasst.

5. Küchenmaschine (1) nach dem vorhergehenden Anspruch, **dadurch gekennzeichnet, dass** eine Mindestpausendauer hinterlegt ist und die Steuerungseinrichtung (10) so eingerichtet ist, dass der Speisenzubereitungsvorgang unverändert nach der Reaktivierung des Kochmodus (30) fortgesetzt werden kann, wenn die Pausendauer kürzer als die Mindestpausendauer ist.

6. Küchenmaschine (1) nach einem der vorhergehenden Ansprüche, **dadurch gekennzeichnet, dass** die Steuerungseinrichtung (10) so eingerichtet ist, dass die Messgröße zum Zeitpunkt der Aktivierung (35, 33, 37) des Pausenmodus (31) und zum Zeitpunkt der Reaktivierung (36, 34, 38) des Kochmodus (30) gemessen und/oder für die Ermittlung der Änderung verarbeitet wird.

7. Küchenmaschine (1) nach einem der vorhergehenden Ansprüche, **dadurch gekennzeichnet, dass** die Steuerungseinrichtung (10) so eingerichtet ist, dass der Speisenzubereitungsvorgang unverändert nach der Reaktivierung des Kochmodus (30) fortgesetzt werden kann, wenn der aktuelle durchgeführte Rezeptschritt (15) kein Erhitzen beinhaltet und/oder eine Freigabe zum unveränderten Fortsetzen im Falle eines Wechsels in den Pausenmodus und zurück in den Kochmodus im digitalen Rezept (14) oder dem Rezeptschritt (15) hinterlegt ist.

8. Küchenmaschine (1) nach einem der vorhergehenden Ansprüche, **dadurch gekennzeichnet, dass** ein digitales Rezept (14) oder ein Rezeptschritt (15) eine Sperrinformation enthalten kann und die Steuerungseinrichtung (10) so eingerichtet ist, dass im Falle des Vorliegens der Sperrinformation in einem aktuell durchgeführten Rezeptschritt (15) keine Aktivierung des Pausenmodus (31) zugelassen wird.

9. Küchenmaschine (1) nach einem der vorhergehenden Ansprüche, **dadurch gekennzeichnet, dass** die Steuerungseinrichtung (10) eine Anpassungsprüfungseinheit (25) umfasst und so eingerichtet ist, dass im Falle der Aktivierung des Pausenmodus (31) die Anpassungsprüfungseinheit (25) auf Basis der ermittelten Änderung des Speisenzubereitungsvorgangs und/oder der Speise (20) infolge eines Wechsels von dem Kochmodus (30) in den Pausenmodus (31) und zurück in den Kochmodus (30) ermittelt, ob der Speisenzubereitungsvorgang nach der Reaktivierung des Kochmodus (31) anzupassen ist oder nicht.

10. Küchenmaschine (1) nach dem vorhergehenden Anspruch, **dadurch gekennzeichnet, dass** die Steuerungseinrichtung (10) eine Anpassungsermittlungseinheit (26) umfasst und so eingerichtet ist, dass im dem Fall, dass die Anpassungsprüfungseinheit (25) ermittelt, dass nach der Reaktivierung des Kochmodus (31) der Speisenzubereitungsvorgang anzupassen ist, die einen geänderten Wert (17`) für den Kochparameter (16) oder geänderten Werte (17`) für die Kochparameter (16) zur Anpassung des Speisenzubereitungsvorgangs nach der Reaktivierung des Kochmodus (31) ermittelt.

11. Küchenmaschine (1) nach einem der vorhergehenden Ansprüche, **dadurch gekennzeichnet, dass** die Steuerungseinrichtung (10) so konfiguriert ist, dass unabhängig von dem digitalen Rezept (14) die Speise (20) mithilfe des Werkzeugs (9) nach einer Reaktivierung des Kochmodus (30) im Anschluss an einen Pausenmodus (31) durchmischt wird, wenn bei oder vor der zuvor erfolgten Aktivierung des Pausenmodus (31) die Speise (20) erhitzt worden war.

12. Küchenmaschine (1) nach einem der zwei vorhergehenden Ansprüche, **dadurch gekennzeichnet, dass** die Steuerungseinrichtung (10) so konfiguriert ist, dass ein Zielparameter mit mehreren, alternativen Varianten von der Anpassungsprüfungseinheit (25) und/oder der Anpassungsermittlungseinheit (26) berücksichtigt wird und/oder die alternativen Varianten mindestens eine der folgenden Varianten beinhalten: schnellstmögliche Speisenzubereitung; bestmögliche Speisenzubereitungsdauereinhaltung; Energiesparen; möglichst unverändert fortsetzen.

13. Küchenmaschine (1) nach einem der vorhergehenden Ansprüche, **dadurch gekennzeichnet, dass** ein digitales Rezept (14) oder ein Rezeptschritt (15) eine Anpassungsprüfungsinformation (39) und/oder eine Anpassungsinformation (41) enthalten kann und die Steuerungseinrichtung (10) so eingerichtet ist, dass im Falle einer Aktivierung des Pausenmodus (31) die Anpassungsprüfungsinformation (39) zur Ermittlung des Vorliegens oder Nicht-Vorliegens eines Anpassungsbedarfes des Speisenzubereitungsvorgangs berücksichtigt wird und/oder die Anpassungsinformation (41) bei einer Ermittlung einer benötigten Anpassung des Speisenzubereitungsvorgangs berücksichtigt wird.

14. Verfahren zum Durchführen eines Speisenzubereitungsvorgangs mit einer Küchenmaschine (1) zum Erhitzen, Dampfgaren, Zerkleinern und/oder Mischen einer Speise (20) in einem Speisenzubereitungsgefäß (2) während eines Kochmodus (30) gemäß Rezeptschritten (15) eines digitalen Rezeptes (14),
wobei das Verfahren folgende Schritte umfasst:
- Aktivieren eines Pausenmodus (31) während des Kochmodus (30), so dass vom Kochmodus (30) in den Pausenmodus (31) gewechselt wird,
- Reaktivieren des Kochmodus (30) während des Pausenmodus (31), so dass vom Pausenmodus (31) zurück in den Kochmodus (30) gewechselt wird,
- Erfassen mindestens einer Messgröße, um eine Änderung des Speisenzubereitungsvorgangs und/oder der Speise (20) infolge des Wechsels von dem Kochmodus (30) in den Pausenmodus (31) und zurück in den Kochmodus (30) zu ermitteln.

15. Computerprogrammprodukt, umfassend Befehle, die bei der Ausführung des Programms durch eine Steuerungseinrichtung (10) diese veranlassen, das Verfahren nach dem vorhergehenden Anspruch durchzuführen.
